# EUROPÄISCHE PATENTANMELDUNG

(11) **EP 1 034 818 A1**
(43) Veröffentlichungstag der Anmeldung: **13.09.2000**
(21) Anmeldenummer: 99104494.2
(22) Anmeldetag: 05.03.1999
(51) Int. Cl.: A63B 57/00, A63B 71/06, A63B 69/36

(54) **Golfnavigationsgerät**

(71) Anmelder: Talkenberg, Andrea, Dr., 20354 Hamburg (DE); Talkenberg, Herwarth, Dipl.-Ing., 20354 Hamburg (DE)
(72) Erfinder: Talkenberg, Andrea, Dr., 20354 Hamburg (DE); Talkenberg, Herwarth, Dipl.-Ing., 20354 Hamburg (DE)
(74) Vertreter: Glawe, Delfs, Moll & Partner

(57) **Zusammenfassung**

Golfnavigationsgerät zum Bestimmen und Anzeigen der Position eines Golfspielers auf einem Golfplatz, das portabel ist und eine Navigationseinrichtung, eine Speichereinrichtung (5), eine Eingabeeinrichtung (7) sowie eine Anzeigeeinrichtung (6) aufweist, die mit einer Recheneinrichtung (3) verbunden sind, wobei in der Speichereinrichtung (5) eine digitalisierte Golfplatzkarte gespeichert ist und ferner in der Speichereinrichtung (5) ein Muster-Spielverlauf gespeichert ist. Die Erfindung betrifft ferner ein Verfahren zum Navigieren bei einem Golfspiel mit Auslesen und Anzeigen eines Muster-Spielverlaufs.

## Beschreibung

Die Erfindung betrifft ein Golfnavigationsgerät zum Bestimmen und Anzeigen der Position eines Golfspielers auf einem Golfplatz, das portabel ist und eine Navigationseinrichtung, eine Speichereinrichtung, eine Eingabeeinrichtung sowie eine Anzeigeeinrichtung aufweist, die mit einer Recheneinrichtung verbunden sind, wobei in der Speichereinrichtung eine digitalisierte Golfplatzkarte gespeichert ist.

Es ist ein portables Golfnavigationsgerät bekannt, das mittels eines Navigationssystems eine Position eines Spielers auf einem Golfplatz bestimmt und auf einer graphischen Anzeigeeinrichtung zusammen mit einem wählbaren Ausschnitt einer Karte des Golfplatzes sowie zusätzlichen Informationen anzeigt, wie beispielsweise die Entfernung zu dem Zielpunkt der Bahn oder zu Hindernissen (US-A-5,438,518). Das Golfnavigationsgerät umfaßt ein auswechselbares Speichermodul, in dem eine digitalisierte Karte des Golfplatzes gespeichert ist, die durch Einscannen einer herkömmlichen Karte oder von einem Luftbild erzeugt wurde. Zur Bestimmung der Position dient ein Satellitennavigationsempfänger, der das Global-Positioning-System (GPS) nutzt. Zur Verbesserung der bei reiner GPS-basierter Navigation unbefriedigenden Genauigkeit ist zusätzlich eine ortsfeste Referenzstation zur Bereitstellung von Positionskorrekturdaten vorgesehen, die beispielsweise in einem Clubhaus des Golfplatzes angeordnet ist.

Ferner sind Navigationssysteme zum Bestimmen und Anzeigen einer Position eines Golfspielers auf einem Golfplatz bekannt, die eine ortsfest angeordnete Basisstation und eine oder mehrere Mobilstationen umfassen (WO-A-98/05978, US-A-5,689,431). Die Mobilstation ist in einem Golfgefährt angeordnet. Zur Bestimmung von deren Position ist neben dem GPS-Empfänger zusätzlich eine Koppelnavigationseinrichtung vorgesehen, die die von dem Golfgefährt zurückgelegten Wegstrecken und deren Richtung auswertet. Informationen über den Aufenthaltsort des Golfgefährts werden über Funk an die Basisstation, Informationen über die zu spielende Bahn werden von der Basisstation an die Mobilstation über Funk übertragen. Die Mobilstation hat eine Anzeigeeinrichtung, auf der ein wählbarer Ausschnitt einer Karte des Golfplatzes dargestellt werden kann. Ferner können auf der Anzeigeeinrichtung weitere Daten, beispielsweise die Entfernung zu dem Zielpunkt (Loch), dargestellt werden. Die Mobilstation kann auch portabel sein, so daß der Golfspieler sie mit sich führen und die Anzeige auch in den Fällen ablesen kann, wenn die Anzeige in dem Golfgefährt von dem Abschlagort aus nicht abgelesen werden könnte.

Nachteilig an den bekannten Vorrichtungen ist, daß sich die Funktionalität der Geräte auf reine Protokollierungsfunktionen beschränkt und nur wenig zum Lernfortschritt des Golfspielers beiträgt. Ferner ist nachteilig, daß sie entweder zu ungenau sind oder zur Erhöhung der Genauigkeit auf externe Systeme, wie beispielsweise Referenzstationen, angewiesen sind. Letztere stehen aber häufig an anderen Golfplätzen nicht zur Verfügung und schränken somit die örtliche Benutzbarkeit des Navigationsgeräts ein.

Der Erfindung liegt die Aufgabe zugrunde, eine Vorrichtung gemäß dem Oberbegriff des Anspruchs 1 zu schaffen, die einem Golfspieler ein leichteres Lernen ermöglicht.

Die erfindungsgemäße Lösung liegt in den Merkmalen der Ansprüche 1 und 18; vorteilhafte Weiterbildungen sind in den Unteransprüchen angegeben. Erfindungsgemäß ist vorgesehen, daß in der Speichereinrichtung ein Muster-Spielverlauf gespeichert ist. Dies hat den Vorteil, daß der Muster-Spielverlauf aus der Speichereinrichtung ausgelesen und dargestellt werden kann, wodurch dem Golfspieler eine Möglichkeit zum Vergleich zwischen seinem Spiel und dem durch den Muster-Spielverlauf repräsentierten Spiel ermöglicht ist. Bei dem Muster-Spielverlauf handelt es sich zweckmäßigerweise um einen Spielverlauf mit Vorbildcharakter, wie er beispielsweise von einem Golflehrer oder einem professionellen Spieler auf dem jeweiligen Platz gespielt wurde. Selbstverständlich braucht nicht nur ein Muster-Spielverlauf gespeichert zu sein, sondern es können auch mehrere zu einem Golfplatz oder auch zu mehreren Golfplätzen gespeichert sein. So können verschiedene Muster-Spielverläufe beispielsweise unterschiedliche Schwierigkeitsgrade widerspiegeln, wodurch dem Golfspieler je nach seinem Können und Lernfortschritt ein geeigneter Muster-Spielverlauf als Referenz zur Verfügung steht. Dadurch, daß Muster-Spielverläufe sich auch auf verschiedene Golfplätze beziehen können, kann am Anfang ein Muster-Spielverlauf auf einem einfachen Golfplatz und bei fortgeschrittenem Können einer auf einem schwierigeren Golfplatz als Referenz herangezogen werden. Die erfindungsgemäße Vorrichtung ist somit sowohl für beginnende wie auch für fortgeschrittene Golfspieler ein wertvolles Mittel, um weitere Lernfortschritte zu erzielen und/oder sie an unbekannte Golfplätze mit ihren lokalen Besonderheiten heranzuführen. An dem gespeicherten Muster-Spielverlauf als Referenz verdeutlichen sich Stärken und Schwächen des Golfspielers. Die erfindungsgemäße Vorrichtung hat ferner den Vorteil, daß der Golfspieler eine Art Wettkampf gegen den Golfspieler führen kann, von dem ein Spielverlauf als der Muster-Spielverlauf in der Speichereinrichtung gespeichert ist. Auf diese Weise kann auch ein Wettkampf ausgetragen werden, ohne daß es erforderlich ist, daß sämtliche Teilnehmer zur selben Zeit auf dem Golfplatz anwesend sind.

Nachfolgend sollen einige in der Beschreibung verwendete Begriffe erläutert werden:

Unter einer Speichereinrichtung wird eine Einrichtung zum Speichern von Daten verstanden. Der Begriff umfaßt sowohl fest installierte wie auch auswechselbare Speichereinrichtungen, die nachfolgend als Speicherbaustein bzw. Speichermodul bezeichnet sind.

Unter einer Navigationseinrichtung wird eine Einrichtung verstanden, die mittels von Sensoren erhaltener Daten die aktuelle Position ermittelt, an der sich das Golfnavigationsgerät bzw. der Golfspieler befindet.

Unter einer Recheneinrichtung wird eine Einrichtung verstanden, in der Daten verarbeitet werden. Dies umfaßt auch das Lesen und Schreiben sowie Anzeigen von Daten.

Unter dem Begriff Spielverlauf wird ein Ensemble von Positionen auf dem Golfplatz verstanden, die der Golfspieler in dem Laufe einer Spielrunde auf den Bahnen des Golfplatzes eingenommen hat.

Unter einem Muster-Spielverlauf wird ein Spielverlauf verstanden, der in der Speichereinrichtung gespeichert ist und als Referenz dient.

Unter einem Ist-Spielverlauf wird ein Spielverlauf des aktuellen oder eines vorgehenden Spiels verstanden, der während eines Spiels in die Speichereinrichtung geschrieben wird.

Unter einem Schlägertyp wird ein Golfschläger aus einem Satz unterschiedlicher Golfschläger verstanden, beispielsweise Eisen 5 oder Holz 6.

Unter Schlagdaten werden Informationen betreffend die Schläge verstanden, beispielsweise der Ort des Schlages und der Schlägertyp.

Unter einer Absolut-Position wird eine Position verstanden, die ohne Kenntnis einer vorhergehenden Position bestimmbar ist.

Unter einer Relativ-Position wird eine Position verstanden, zu deren Bestimmung die Kenntnis einer vorhergehenden Position erforderlich ist.

Unter einem Schätzer wird eine besondere Recheneinrichtung verstanden, die einen Wert eines nicht gemessenen Parameters aus anderen gemessenen Parametern mittels eines internen Modells ermittelt.

Unter einem Schrittdetektor wird eine Einrichtung zum Bestimmen eines Ereignisses eines Schritts (Schrittereignis) beim Gehen verstanden, beispielsweise das Aufsetzen eines Fußes.

Unter einer Zykluszeit wird die für einen Schritt benötigte Zeitdauer verstanden, die durch zwei direkt aufeinanderfolgende Schrittereignisse bestimmt ist.

Die Golfplatzkarte kann in einer beliebigen digitalisierten Form in der Speichereinrichtung eingespeichert sein. Mit Vorteil weist sie Höheninformationen auf; sie wird in diesem Fall als dreidimensionale Karte bezeichnet. Die Angaben zur Höhe können sowohl relativ auf einen Referenzpunkt bezogen oder absolut bezogen auf Normal Null gespeichert sein. Ferner kann die Golfplatzkarte Angaben zur Höhe von Hindernissen enthalten. Die Golfplatzkarte kann auch weitere Informationen aufweisen, beispielsweise die jeweiligen örtlichen magnetischen Mißweisungen für das in der Golfplatzkarte dargestellte Gebiet. Vorteilhafterweise ist die Golfplatzkarte in einem speicherplatzsparenden Format gespeichert, beispielsweise als Vektorkarte.

Die Eingabeeinrichtung umfaßt zweckmäßigerweise ein Tastenfeld zur Eingabe von Daten, beispielsweise Schlagdaten, und eine Cursorwippe, beispielsweise zur Auswahl eines Zielpunkts.

Zweckmäßigerweise ist in der Speichereinrichtung ein Ist-Spielverlauf mit Wegdaten des Golfspielers und Zusatzinformationen, insbesondere Schlagdaten, gespeichert. Neben Schlagdaten können die Zusatzinformationen auch weitere Werte, beispielsweise Windinformationen wie Windstärke und Windrichtung, umfassen. Das Golfnavigationsgerät ersetzt auf diese Weise bisher üblicherweise verwendete Protokollierungsvorrichtungen, wie Karten zur Eintragung der Schlagzahl oder herkömmliche Schlagzähler; darüber hinaus stellt es zusätzliche Funktionen bereit.

Zweckmäßigerweise ist auf der Anzeigeeinrichtung ein wählbarer Bereich der Golfplatzkarte, der Muster-Spielverlauf, ein Ist-Spielverlauf und/oder die Entfernung sowie die Richtung zu einem Zielpunkt wahlweise darstellbar. Um einen Bereich aus der Golfplatzkarte darstellen zu können, ist die Anzeigeeinrichtung zweckmäßigerweise graphikfähig. Üblicherweise ist dann der gewählte Bereich der Golfplatzkarte als Hintergrund dargestellt und zusätzlich sind der aktuelle Ist-Spielverlauf und der Muster-Spielverlauf dargestellt. Ferner sind in einem Bereich der Anzeigeeinrichtung Angaben zu der Entfernung und/oder Richtung zu dem Zielpunkt dargestellt. Bei diesem handelt es sich in der Regel um das Loch der gespielten Bahn, dessen Position auch durch den Flächenschwerpunkt des Grüns dargestellt sein kann. Ferner können die Entfernung und/oder Richtung zu einem frei wählbaren Hilfsziel, beispielsweise einem markanten Landschaftspunkt oder einem Hindernis, dargestellt sein.

Vorteilhafterweise ist eine Vergleichseinrichtung zum Vergleichen eines Ist-Spielverlaufs mit einem anderen oder dem Muster-Spielverlauf vorgesehen. Spielverläufe können hinsichtlich des Wegverlaufs und hinsichtlich der Zusatzinformationen verglichen und dargestellt werden, beispielsweise hinsichtlich der Anzahl der benötigten Schläge. Vorteilhafterweise weist das Golfnavigationsgerät eine Zeitmeßeinrichtung auf. In diesem Fall kann die Vergleichseinrichtung auch zeitabhängige Daten, beispielsweise zum Spielen einer Bahn oder der gesamten Runde benötigte Zeitdauer, einbeziehen.

Bei einer vorteilhaften Ausführungsform weist die Navigationseinrichtung sowohl eine Absolut-Positions-Bestimmungseinrichtung wie auch eine Relativ-Positions-Bestimmungseinrichtung auf. Die Kombination dieser beiden Bestimmungseinrichtungen hat den Vorteil, daß unabhängig voneinander ermittelte Positionsdaten verfügbar sind. Neben einer durch diese Redundanz größeren Zuverlässigkeit der Positionsbestimmung kann durch Datenfusion auch eine höhere Genauigkeit erreicht werden. Durch die Datenfusion kann die gute Langzeitgenauigkeit einer Absolut-Positions-Bestimmungseinrichtung mit der guten Kurzzeitgenauigkeit einer Relativ-Positions-Bestimmungseinrichtung verknüpft werden.

Zweckmäßigerweise handelt es sich bei der Absolut-Positions-Bestimmungseinrichtung um einen Empfänger, der zum Empfangen von Signalen der Satelliten des Global-Positioning-Systems (GPS) geeignet ist. Die Empfänger sind kostengünstig kommerziell erhältlich. Besonders vorteilhaft ist es, wenn es sich um einen für Differential-GPS (DGPS) geeigneten Empfänger handelt, da zusammen mit einer entsprechenden, Differentialsignale aussendenden Referenzstation eine gegenüber dem normalen GPS wesentlich erhöhte Positionsbestimmungsgenauigkeit erreicht werden kann. Die Referenzstation ist üblicherweise in dem Clubhaus des Golfclubs angeordnet. Es ist jedoch für den DGPS-Empfänger nicht unbedingt erforderlich, daß stets eine Referenzstation zur Verfügung steht; fehlt diese, so arbeitet er wie ein herkömmlicher GPS-Empfänger.

Eine weitere Möglichkeit zur Absolut-Positions-Bestimmung ist die Peilung von Geländemarken, deren Ort bekannt ist, insbesondere im Wege der Kreuzpeilung. Der Begriff Kreuzpeilung bezeichnet die Peilung zweier Landmarken von dem gleichen Peilort aus. Der Schnittpunkt der ermittelten Standlinien ist der Standort des Beobachters (Peilort). Eine solche Kreuzpeilung ist mit dem erfindungsgemäßen Golfnavigationsgerät mit geringem Aufwand durchführbar, da peilbare Landmarken in der digitalisierten Golfplatzkarte gespeichert sind.

Die Relativ-Positions-Bestimmungseinrichtung weist vorzugsweise eine Wegmeßeinrichtung und eine Winkelmeßeinrichtung auf. Mit diesen beiden Meßeinrichtungen kann mittels der Relativ-Postions-Bestimmungseinrichtung eine Koppelnavigation durchgeführt werden. Sie hat insbesondere auf kurzen Strecken den Vorteil einer gegenüber der GPS-Navigation größeren Genauigkeit. Ferner stehen durch die Koppelnavigation Positionsdaten auch in den Fällen zur Verfügung, wenn die GPS-Navigationseinrichtung nicht arbeitet, weil zum Beispiel deren Empfänger durch Hindernisse von den GPS-Satelliten abgeschirmt ist.

Zweckmäßigerweise sind Sensoren der Relativ-Positions-Bestimmungseinrichtung räumlich getrennt angeordnet und weisen vorzugsweise eine drahtlose Übertragungseinrichtung auf. Dabei brauchen nicht alle vorgesehenen Sensoren getrennt angeordnet zu sein, es können auch einige am Navigationsgerät und einige extern angeordnet sein. Beispielsweise können sie an dem Golfgefährt oder an einem Golftaschenwagen angeordnet sein und Meßsignale drahtlos an das von dem Golfspieler getragene Golfnavigationsgerät übermitteln. In diesem Fall kann die Wegmeßeinrichtung als ein einfacher, die Drehung eines Rades des Golfgefährts oder des Golftaschenwagens abtastender Sensor ausgeführt sein. Besonders zweckmäßig ist eine Ausführung als induktiv arbeitender Sensor, der zusätzlich elektrische Energie nach dem dynamo-elektrischen Prinzip bereitstellt. Die Übertragungseinrichtung kann von den Sensoren gemessene Signale übermitteln oder, in Verbindung mit einer gleichfalls extern bei den Sensoren angeordneten Recheneinrichtung, Positionsdaten an das Golfnavigationsgerät übertragen; dem geringen Nachteil der zusätzlich erforderlichen Recheneinrichtung steht der Vorteil eines wesentlich geringeren Bandbreitenbedarfs gegenüber. Ferner ist die Robustheit gegenüber Störungen der Übertragung größer, da bei einer Störung der Übertragung von Signalen der Wegmeßeinrichung eine Verfälschung der Wegstrecke eintritt, die nachfolgend durch Koppelnavigation ermittelte Relativ-Postitionen entwertet, während bei einer Störung der Übertragung einer Positionsangabe nur diese falsch ist und die nachfolgenden wieder gültig sind (durch deren Kenntnis dann die falsche Positionsangabe erkannt und eliminiert werden kann).

Die Winkelmeßeinrichtung umfaßt zweckmäßigerweise einen Kompaßsensor, der die aktuelle Richtung bezogen auf die magnetische Nordrichtung angibt. Um örtlich verschiedene Mißweisungen, beispielsweise durch im Boden verlegte Kabel, ausgleichen zu können, sind in der Karte zweckmäßigerweise Zusatzinformationen hinsichtlich der örtlichen Mißweisung gespeichert. Zur Einsparung von Speicherplatz sind sie vorteilhafterweise als Isogonen gespeichert. Als einfacher allgemeiner Fall werden vergleichbar zu Seekarten folgende Eintragungen in der digitalen Karte vorgesehen: Mißweisung zu einem gegebenen Datum, jährliche Änderung der Mißweisung.

Zweckmäßigerweise ist ferner eine Kompensationseinrichtung vorgesehen, die insbesondere durch Neigung entstehende Meßfehler ausgleicht.

Zweckmäßigerweise ist wenigstens einer der Sensoren als Beschleunigungsgeber ausgebildet und an dem Golfspieler angeordnet. Durch den unmittelbar an dem Golfspieler angeordneten Beschleunigungsgeber können die für die Wegmeßeinrichtung benötigten Eingangssignale einfach und zuverlässig ermittelt werden. Die Anordnung direkt an dem Golfspieler hat den Vorteil, daß mittels der Koppelnavigation die genaue Position des Golfspielers bestimmt wird und nicht - wie bei der Anordnung an einem Wagen - die Position des Wagens. Das ist insbesondere auf Golfplätzen von Vorteil, die sich aufgrund ihrer Landschaftsgestaltung weniger zum Befahren oder, beispielsweise aufgrund starker Steigungen oder Gefälle, auch nicht sehr zum Mitführen von Golftaschenwagen eignen.

Zweckmäßigerweise ist der Beschleunigungsgeber zur Messung in zwei Richtungen, insbesondere in Längs- und Vertikalrichtung, eingerichtet. Dadurch stehen Meßdaten in zwei voneinander unabhängigen Richtungen zur Verfügung; dies ist für die Auswertung vorteilhaft, da dies insbesondere auch das Berechnen von Kreuzkorrelationen erlaubt.

Zweckmäßigerweise weist ein räumlich getrennt angeordneter Sensor ein durch die Übertragungseinrichtung übermittelbares Identifikationsmerkmal auf. Ein solches Identifikationsmerkmal hat den Vorteil, daß Meßdaten, die von der Übertragungseinrichtung an das Golfnavigationsgerät übermittelt werden, dank des Identifikationsmerkmals dem jeweiligen Sensor zugeordnet werden können. Dies ist insbesondere von Bedeutung, wenn die Spielverläufe mehrerer Golfspieler von einem Golfnavigationsgerät erfaßt werden sollen, da dann die jeweiligen Positionsdaten der einzelnen Spieler diesen zugeordnet werden können.

Gemäß einer weiteren vorteilhaften Weiterbildung umfaßt das Golfnavigationsgerät eine Windmeßeinrichtung. Die ermittelten Winddaten, insbesondere Windgeschwindigkeit und Windrichtung, werden an die Recheneinrichtung angelegt und können für Berechnungen verwendet werden und als Zusatzinformation mit dem Ist-Spielverlauf gespeichert werden. Es kann jedoch auch vorgesehen sein, daß die Winddaten von dem Benutzer über die Eingabeeinrichtung eingegeben werden.

Bei einer vorteilhaften Weiterbildung, die gegebenenfalls auch unabhängigen Schutz für andere Anwendungen als die Golfnavigation genießt, weist die Wegmeßeinrichtung einen Gehgeschwindigkeitschätzer auf. Dieser ermittelt die Gehgeschwindigkeit des Golfspielers und/oder unter Berücksichtigung der Zykluszeit eines Schritts die Schrittlänge. Die Eingangssignale sind vorzugsweise Signale des Beschleunigungsgebers. Das zur Ermittlung der Gehgeschwindigkeit verwendete Verfahren ist später beschrieben.

Gemäß einer weiteren vorteilhaften Ausführungsform weist das erfindungsgemäße Gerät eine Eingabeeinrichtung zur Markierung einer aktuellen Ballposition auf. Zu diesem Zweck kann auf der Golfplatzkarte eine bestimmte Position markiert und dem Gerät bspw. per Sensor oder Tasteneingabe mitgeteilt werden, daß an dieser Position zu einem bestimmten Zeitpunkt der Ball gelegen hat oder liegt. Diese Funktion ermöglicht es, Schläge nachträglich einzugeben, wenn man beim eigentlichen Schlag vergessen hat, dem Gerät "mitzuteilen", daß ein Schlag geführt wird. Ferner kann diese Funktion hilfreich sein bei der Absolut-Positions-Bestimmung für den Fall, daß ein zuverlässiges Absolut-Positions-Bestimmungsverfahren wie DGPS nicht zur Verfügung steht. In diesem Fall kann der Spieler jedes Mal dann, wenn sich der Ball bei oder in der Nähe einer auf der Karte verzeichneten Landmarke befindet, diese Position erfassen und als aktuelle Ballposition markieren. Das Gerät hat dann einen neuen Startpunkt, von dem aus bspw. eine weitere Koppelortung vorgenommen werden kann.

Die Erfindung erstreckt sich auch auf ein Verfahren zum Navigieren bei einem Golfspiel mit den Schritten Auslesen eines Bereichs einer digitalen Golfplatzkarte aus einer Speichereinrichtung, Anbieten einer Auswahlmöglichkeit zwischen mindestens einem Muster-Spielverlauf und/oder einem in der Speichereinrichtung gespeicherten Ist-Spielverlauf, Auslesen eines Muster-Spielverlaufs aus der Speichereinrichtung, Bestimmen der aktuellen Position mittels einer Navigationseinrichtung, Speichern eines Ist-Spielverlaufs in der Speichereinrichtung und Anzeigen und/oder Vergleichen des Ist-Spielverlaufs mit dem gewählten Spielverlauf. Die genannten Schritte des Verfahrens müssen nicht notwendigerweise in der genannten Reihenfolge ausgeführt werden, beispielsweise kann das Speichern eines Ist-Spielverlaufs auch ganz am Schluß erfolgen. Das Anzeigen der aktuellen Position geschieht zweckmäßigerweise fortlaufend, bis ein Zielpunkt oder das Spielende erreicht ist.

Das erfindungsgemäße Verfahren hat den Vorteil, daß durch Auslesen und Anzeigen sowie gegebenenfalls Vergleichen mit einem Spielverlauf als Referenz dem Golfspieler die Möglichkeit geboten ist, sein aktuelles oder ein vergangenes Spiel mit der Referenz zu vergleichen. Auf diese Weise kann der Golfspieler seine Spieltechnik, insbesondere in schwierigen Abschnitten, unter Berücksichtigung des Muster-Spielverlaufs analysieren; die Wiedergabe eigener, vergangener Spielverläufe hat den Vorteil, daß der Golfspieler Abschnitte erkennt, in denen er wiederholt dieselben Fehler macht, und so insbesondere auch unter Berücksichtigung des Muster-Spielverlaufs seine Technik verbessern kann. Ferner bietet das erfindungsgemäße Verfahren die Möglichkeit eines virtuellen Wettkampfs. Dabei wird das aktuelle Spiel des Golfspielers, also der Ist-Spielverlauf, und im Vergleich dazu der Muster-Spielverlauf auf der Anzeigeeinrichtung dargestellt. Der Spieler kann so versuchen, "berühmte" Spiele nachzuspielen.

Zweckmäßigerweise umfaßt das Verfahren das Abfragen eines Tastendrucks am Ort des Abschlags (Abschlagort). Durch Betätigen dieser Taste wird zum einen die aktuelle Position als die Position des Abschlagorts übernommen und zum anderen eine Zähleinrichtung für die Anzahl der Schläge um 1 hochgezählt. Mit Vorteil ist diese Abfrage verbunden mit einem Abfragen eines Schlägertyps. Dies hat den Vorteil, daß insbesondere für spätere statistische Auswertungen die Angabe zur Verfügung steht, mit welchem Schläger ein bestimmter Schlag gespielt wurde.

Vorzugsweise ist ferner das Abfragen einer Anzahl von Golfspielern und Speichern der jeweiligen Ist-Spielverläufe in einem zugeordneten Bereich der Speichereinrichtung vorgesehen. Dies hat den Vorteil, daß die Spielverläufe mehrerer Spieler protokolliert werden können, ohne daß verhältnismäßig umständlich und fehleranfällig zu handhabende Zähl-Karten erforderlich sind. Solch eine zuverlässige, automatische Protokollierung ist insbesondere bei Wettkämpfen vorteilhaft.

Zweckmäßigerweise umfaßt das Verfahren das Speichern von Wegdaten und Zusatzinformationen, insbesondere Schlagdaten in dem einem Ist-Spielverlauf zugeordneten Bereich der Speichereinrichtung. Durch die Speicherung steht eine Fülle von Informationen zur Verfügung, die von im nachfolgenden Text beschriebenen vorteilhaften Weiterbildungen des erfindungsgemäßen Verfahrens genutzt werden.

Zweckmäßigerweise umfaßt das Verfahren das Abfragen oder Auswählen eines Zielpunkts sowie Anzeigen der Entfernung zu dem Zielpunkt. Die Entfernung zu dem Zielpunkt der Bahn wird berechnet und angezeigt. Bei dem Zielpunkt handelt es sich in der Regel um das Loch der jeweils gespielten Bahn; zu dessen Bestimmung brauchen nicht unbedingt die Koordinaten der aktuellen Position des Lochs verwendet zu werden, sondern es kann auch der Flächenschwerpunkt des Grüns zur Bestimmung dienen. Das Auswählen kann manuell oder automatisch durch Bestimmen der momentan zu spielenden Bahn mittels der aktuellen Position und Auslesen der Koordinaten des Zielpunkts vorgenommen werden. Zweckmäßigerweise wird auch die Richtung zu dem Zielpunkt berechnet und angezeigt; dies ist insbesondere bei verwinkelten Bahnen von Vorteil. Damit wird dem Golfspieler ein zuverlässiges Bestimmen der Entfernung zu dem Zielpunkt ermöglicht, ohne daß er von möglicherweise auf dem Golfplatz bereitgestellten Hilfsmitteln wie Entfernungstafeln abhängig ist. Die Kenntnis der Entfernung zu dem Zielpunkt ist insbesondere deshalb von Bedeutung, um dem Golfspieler die Auswahl des richtigen Schlägers aus dem Golfschläger-Satz zu ermöglichen.

Zweckmäßigerweise ist ferner vorgesehen, daß ein Hilfsziel abgefragt und die Entfernung zu diesem berechnet und gegebenenfalls angezeigt wird. Dies findet seinen Grund darin, daß häufig für einen Golfspieler nicht nur die Entfernung zu dem Loch interessant ist, sondern auch die Entfernung zu einem Hindernis, wie beispielsweise einer Wasserfläche oder einem Sandbunker. Zweckmäßigerweise bewegt der Benutzer bei dem Abfragen des Hilfsziels einen Cursor mittels der Eingabeeinrichtung auf der dargestellten Golfplatzkarte zu dem interessierenden Punkt und markiert diesen als Hilfsziel; daraus und aus der aktuellen Position werden dann die Entfernung und gegebenenfalls Richtung berechnet sowie angezeigt.

Zweckmäßigerweise ist ferner vorgesehen, daß die Windverhältnisse abgefragt oder von der Windmeßeinrichtung eingelesen werden. Dies ist insbesondere zur Korrektur von gemessenen Schlagweiten zweckmäßig, insbesondere wenn diese für statistische Zwecke oder zur Vorhersage einer mit einem bestimmten Schlägertyp zu erwartenden Schlagweite verwendet werden.

Vorteilhafterweise ist ferner vorgesehen, daß mehrere Ist-Spielverläufe in mindestens einem Bereich der Speichereinrichtung gespeichert und gesammelt werden. Ein solcher, dafür bestimmter Bereich der Speichereinrichtung wird als Datenpool bezeichnet. Zweckmäßigerweise sind mehrere Datenpools vorgesehen. Sammeln und Speichern der Daten über einen wählbaren Zeitpunkt erfolgt in einem intervallbezogenen Datenpool. Damit kann der Golfspieler seine Spiele beispielsweise eines Tages dokumentieren; es kann jedoch auch ein längerer Zeitraum gewählt werden, so daß der Spieler einen Fort- oder Rückschritt seiner Spieltechnik dokumentieren kann. Wahlweise kann der Spieler sein bestes Spiel auf einem bestimmten Platz markieren und als Referenz zum Abruf bereitstellen.

Ferner ist es vorteilhaft, die Schlagdaten einer Mehrzahl von Schlägen eines Golfspielers in einem spielerbezogenen Datenpool zu sammeln und zu speichern. Zu den Schlagdaten zählt insbesondere der Typ des verwendeten Schlägers und die erreichte Entfernung; gegebenenfalls können auch die jeweiligen Windverhältnisse mit abgespeichert werden oder auch die zu speichernden Werte gleich um einen entsprechend aus den Windverhältnissen ermittelten Korrekturfaktor korrigiert werden. Die Sammlung dieser Daten hat den Vorteil, daß für einen Spieler statistische Kenngrößen für die Schlagweite in Abhängigkeit von den einzelnen Schlägertypen erstellt werden können. Die statistischen Kenngrößen umfassen insbesondere Mittelwerte, Standardabweichungen sowie Maximal- und Minimalwerte.

Zweckmäßigerweise ist ferner vorgesehen, die jeweils auf einem Golfplatz gespielten Ist-Spielverläufe in einem golfplatzbezogenen Datenpool zu sammeln und zu speichern. Dies hat den Vorteil, daß die von einem Spieler auf verschiedenen Golfplätzen erzielten Spielverläufe und die Ergebnisse unabhängig voneinander gespeichert werden und abgerufen werden können. Der Spieler kann beispielsweise bei einem nachfolgenden Besuch eines bereits bespielten Golfplatzes die Daten eines vorhergehenden Spiels abrufen. Dies ist insbesondere von Bedeutung für die in bezug auf den jeweiligen Schlägertyp gespeicherten Schlagdaten, da sich je nach den lokalen Gegebenheiten mit ein und demselben Schlägertyp durchaus unterschiedliche Schlagweiten ergeben können, beispielsweise als Folge unterschiedlicher Bodenbeschaffenheit. Auf diese Weise können die bereits mit einem bestimmten Schlägertyp auf einem bestimmten Golfplatz erzielten Erfahrungen genutzt werden.

Zweckmäßigerweise ist vorgesehen, daß unter Nutzung der gesammelten schlagbezogenen Daten eine Vorhersage (Prädiktion) für eine mit einem Schlägertyp zu erwartende Schlagweite berechnet wird. Sofern vorhanden, werden dabei zweckmäßigerweise auch die Windverhältnisse berücksichtigt. Ferner ist es zweckmäßig, weitere topologische Merkmale aus der Golfplatzkarte auszulesen und in die Berechnung einzubeziehen; dies gilt insbesondere hinsichtlich Höhenunterschieden, wenn beispielsweise von einem erhöht gelegenen Ort abgeschlagen wird. Insbesondere für weniger erfahrene Golfspieler ist es von Vorteil, wenn für unterschiedliche Schlägertypen die zu erwartenden Schlagweiten berechnet und angezeigt werden. Weitere gegebenenfalls in der Berechnung zu berücksichtigende topologische Merkmale sind beispielsweise die Höhe von Hindernissen und die Bodenbeschaffenheit. Dabei kann es zweckmäßig sein, wenn aus der digitalisierten Golfplatzkarte insbesondere Hindernisdaten ausgelesen werden und bestimmte Schlägertypen als weniger empfehlenswert markiert werden, beispielsweise wenn deren Schlagweite eine Landung des Golfballs in einem Hindernisbereich erwarten läßt.

Vorteilhafterweise werden die zur Berechnung verwendeten Rechenmodelle durch Auswerten von mindestens einem Datenpool modifiziert. Dies kann zum Beispiel dazu benutzt werden, die im Rahmen der Prädiktion berechneten Werte der Schlagweite anzupassen, wenn sich aus der statistischen Auswertung ergibt, daß die durchschnittlich erzielten Schlagweiten im Mittel von den vorhergesagten abweichen; dies kann insbesondere dann von Bedeutung sein, wenn andere Schläger als die gewohnten benutzt werden oder in der Person des Golfspielers liegende Veränderungen vorliegen, wie beispielsweise eine Handverletzung.

Zweckmäßigerweise umfaßt das Verfahren das Durchführen einer Datenfusion von absoluten und relativen Positionsdaten. Wie bereits erwähnt, kann dadurch sowohl die Genauigkeit wie auch die Zuverlässigkeit der Navigation gesteigert werden.

Zweckmäßigerweise werden ein Start- und Endpunkt zumindest eines Teils eines Spielverlaufs unter Verwendung relativer oder absoluter Positionsdaten ermittelt und gespeichert, die Differenz zu einer bekannten Position des Endpunkts bestimmt und Parameter für das Koppeln modifiziert. Auf diese Weise können Fehler oder Abweichungen in dem Verfahren zur Berechnung der Koppelnavigation vermindert werden. Zweckmäßigerweise wird die Korrektur nur durchgeführt, wenn die Differenz über einem bestimmten maximal zulässigen Fehlerbetrag liegt. Die korrigierten Parameter für das Koppeln werden zweckmäßigerweise mittels einer Ausgleichsrechnung bestimmt. Dabei wird insbesondere ein Korrekturfaktor für die Ermittlung der Wegstrecke und eine Nullpunktabweichung für die Kompaßeinrichtung bestimmt. Zweckmäßigerweise ist dazu ein Kalibriermodus vorgesehen. Dieser umfaßt ein Abfragen eines Orientierungspunktes, ein Bestimmen einer Richtung zu den Orientierungspunkt, ein Bestimmen der von der Kompaßeinrichtung gemessenen Richtung bei einem zu dem Orientierungspunkt blickenden Benutzer, ein Ermitteln der Winkeldifferenz zwischen den Richtungen und ein Speichern dieser Winkeldifferenz zum Korrigieren der Meßwerte der Kompaßeinrichtung. Die Durchführung dieser Kalibrierungen hat den Vorteil, daß das Verfahren zur Bestimmung der relativen Position sich in teilweise selbstlernender Weise verbessert und so eine verbesserte Positionsbestimmung ermöglicht.

Im Rahmen der Kalibrierung der Kompaßeinrichtung kann mit geringem zusätzlichen Aufwand eine Kreuzpeilung bekannter Landmarken zur Ermittlung einer Absolut-Position als Startpunkt für die anschließende Koppelnavigation ermittelt werden. Auf dem Bildschirm des Golfnavigationsgerätes wird zu diesem Zweck eine erste Landmarke (bspw. die Fahne des Lochs) mittels einer Cursorfunktion ausgewählt. Anschließend richtet der Benutzer sich und das Navigationsgerät auf diese Landmarke aus. Ggf. kann das Gerät zu diesem Zweck eine optische Peileinrichtung aufweisen. Nach erfolgter Ausrichtung wird die Peilung durch Betätigung eines Tasters oder dergleichen gespeichert. Vorzugsweise erscheint die gemessene Standlinie auf dem Bildschirm. Nach dem gleichen Verfahren wird anschließend eine zweite bekannte Landmarke ausgewählt und angepeilt, wobei zur Minimierung der Peilfehler die zweite Standlinie möglichst einen rechten Winkel mit der ersten Standlinie einschließt. Aus dem Schnittpunkt der beiden Standlinien ermittelt das Golfnavigationsgerät den aktuellen Standort.

Eine solche Peilortung kann insbesondere dann vorteilhaft sein, wenn ein anderes ausreichend genaues Absolutortungsverfahren wie Differential-GPS nicht zur Verfügung steht und eine alleinige Koppelortung ausgehend vom Abschlag zu ungenau wird, bspw. aufgrund der Tatsache, daß der Spieler nach einem Schlag ins Rough auf der Suche nach dem Ball eine Vielzahl von Schleifen dreht. Eine Koppelortung kann ferner dann ungenau oder unmöglich werden, wenn der Spieler einen Golfwagen nutzt oder abwechselnd Strecken zu Fuß und mit dem Golfwagen zurücklegt. Mittels Kreuzpeilung kann dann bei Bedarf ein neuer Absolut-Standort als Startpunkt für die weitere Koppelnavigation ermittelt werden.

Bei einer besonders zweckmäßigen Ausführungsform des Verfahrens, die gegebenenfalls Schutz unabhängig von der Anwendung im Rahmen der Golfnavigation verdient, ist vorgesehen, Beschleunigungswerte am Körper des Golfspielers zu messen, sie über einen Zeitraum zu speichern und eine Gehgeschwindigkeit und/oder Gehstrecke mittels eines Modells zum Schätzen eines Gehschritts zu berechnen. Dies hat den besonderen Vorteil, daß eine Bestimmung der zurückgelegten Wegstrecke, wie sie zur Durchführung der Koppelnavigation erforderlich ist, durch eine Messung direkt am Körper des Golfers erfolgen kann. Es ist daher nicht mehr erforderlich, zur Wegmessung auf Radsensoren zurückzugreifen, die an einem Rad eines Golfgefährts oder eines Golftaschenwagens angeordnet sind und so letztlich nur eine Bestimmung von dessen Position ermöglichen. Gemäß einer besonders vorteilhaften Weiterbildung des Verfahrens werden zur Berechnung Beschleunigungswerte in vertikaler Richtung verwendet. Dies vermeidet den Nachteil der üblichen Methode des Berechnens der Geschwindigkeit bzw. Strecke aus einer einfachen oder doppelten Integration der Beschleunigungswerte in horizontaler Richtung über die Zeit, daß nämlich besonders auf geneigtem Untergrund nur eine geringe Genauigkeit erreicht wird. In Abkehr davon verwendet das beanspruchte Verfahren die gemessenen Beschleunigungswerte im wesentlichen als Bewegungssignale. Es wurde erkannt, daß zwischen der Bewegung des menschlichen Körpers und Parametern des Gehens, bspw. Gehgeschwindigkeit, ein Zusammenhang besteht. Dieser ergibt sich insbesondere aus dem Bestreben des menschlichen Organismus, den für den jeweiligen Zustand des Gehens erforderlichen Energieaufwand zu minimieren. In dem erfindungsgemäßen Schätzmodell sind diese Zusammenhänge implementiert. Da die Bewegungssignale im wesentlichen dynamisch sind, fallen zum einen statisch wirkende Störgrößen, wie ein geneigter Untergrund, nicht oder nur vermindert ins Gewicht und zum anderen können sie aus den Meßsignalen abgetrennt und ermittelt werden.

Vorteilhafterweise umfaßt das Verfahren das Messen der Beschleunigung in zwei unabhängigen Richtungen, insbesondere von Längs- und Vertikalbeschleunigungen. Die sich dadurch ergebenden Meßdaten aus zwei unabhängigen Richtungen sind für die Auswertung insbesondere bei dem Berechnen von Kreuzkorrelationen vorteilhaft.

Vorzugsweise umfaßt das Verfahren zum Berechnen der Gehgeschwindigkeit oder Gehstrecke einen ersten Polynomansatz mit einer Korrelation von Varianzen der Beschleunigungswerte zum Berechnen der Gehgeschwindigkeit oder der Schrittlänge. Vorzugsweise werden die Varianzen der Vertikalbeschleunigung über einen Schritt korreliert. Für die Berechnung der Gehgeschwindigkeit ist üblicherweise ein Polynom zweiter oder höherer Ordnung geeignet, für die Berechnung der Schrittlänge ist ein Polynom 1. Ordnung ausreichend.

Zweckmäßigerweise umfaßt das Verfahren ferner das Schätzen einer Steigung der Gehstrecke, insbesondere durch Verwenden eines zweiten Polynomansatzes durch Korrelieren von Mittelwerten der Beschleunigungswerte. Vorzugsweise wird der Mittelwert der Vertikalbeschleunigung korreliert. Aus der Steigung und der zurückgelegten Wegstrecke kann, insbesondere durch Multiplikation mit dem Cosinus des Steigungswinkels, die in der Ebene zurückgelegte Strecke berechnet werden; dies ist insbesondere für die Koppelnavigation von Bedeutung. Das Ermitteln der Steigung der Gehstrecke ermöglicht somit eine wesentliche Steigerung der Genauigkeit der Koppelnavigation.

Bei einer weiteren vorteilhaften Ausgestaltung umfaßt das Verfahren das Schätzen einer Treppensteigung und einer einheitlichen Stufenlänge durch Verwenden der Mittelwerte und Varianzen der Beschleunigungswerte. Die Berücksichtigung einer einheitlichen Stufenlänge trägt der Tatsache Rechnung, daß Treppen üblicherweise aus einer Anordnung von Stufen mit fester Stufenhöhe und Stufenlänge bestehen. Da die einheitliche Stufenlänge aus mehr Meßdaten berechnet werden kann, als dies für einzelne Stufen möglich wäre, ist die Berechnung genauer; ferner entfallen Fehler durch voneinander abweichende Längen einzelner Stufen.

Zweckmäßigerweise umfaßt das Verfahren das Bestimmen einer Zykluszeit eines Schritts. Dies ist insbesondere für das Schätzen einer Schrittweite von Bedeutung, da Gehgeschwindigkeit und Schrittweite über die Zykluszeit miteinander verknüpft sind. So berechnet das Verfahren zweckmäßigerweise einen Schätzwert für die Schrittweite aus einem Mittelwert der Gehgeschwindigkeit und der Zykluszeit. Es kann vorteilhaft sein, wenn eine mittlere Schrittweite durch Mitteilung der Schrittweiten beider Beine berechnet wird.

Vorteilhafterweise umfaßt das Verfahren ferner ein Detektieren eines Abschlags aus den Beschleunigungswerten zum Bestimmen des Abschlagorts. Wird ein Abschlag erkannt, so werden die von der Navigationseinrichtung ermittelten aktuellen Positionsdaten als Abschlagort gespeichert. Dies hat den besonderen Vorteil, daß der Benutzer von der Eingabe des Abschlagorts, für die ansonsten ein Tastendruck an dem jeweiligen Abschlagort erforderlich ist, befreit ist, da der Abschlag aus den Beschleunigungswerten detektiert werden kann, wobei die dabei aktuelle Position als Position des Abschlagorts gespeichert wird. Das umständliche und leicht zu vergessende Eingeben des Abschlagorts entfällt dadurch; damit wird auch die automatisierte Zählung der Zahl der Schläge zuverlässiger.

Ein Ausführungsbeispiel der Erfindung wird im folgenden anhand der Figuren der beigefügten Zeichnung beispielhaft erläutert. Darin zeigen:
- Fig. 1: ein Blockschaltbild des erfindungsgemäßen Geräts;
- Fig. 2: eine schematische Ansicht eines Bereichs eines Golfplatzes mit dem erfindungsgemäßen Gerät und Komponenten des GPS-Systems;
- Fig. 3: eine Ansicht einer Vorderseite des erfindungsgemäßen Geräts;
- Fig. 4: eine Ansicht einer Rückseite des erfindungsgemäßen Geräts;
- Fig. 5: ein Blockschaltbild einer Sensoranordnung;
- Fig. 6: ein Blockschaltbild einer alternativen Sensoranordnung;
- Fig. 7: einen Flußlaufplan des erfindungsgemäßen Verfahrens;
- Fig. 8: einen Flußlaufplan eines Betriebsmodus des erfindungsgemäßen Verfahrens;
- Fig. 9: einen Flußlaufplan eines weiteren Betriebsmodus des erfindungsgemäßen Verfahrens;
- Fig. 10: einen Flußlaufplan zur Kalibrierung der Koppelordnung;
- Fig. 11: einen Flußlaufplan des Gehschätzers zur Bestimmung der Zyklusdauer;
- Fig. 12: einen Flußlaufplan des Gehschätzers zur Bestimmung zyklischer Parameter;
- Fig. 13: einen Flußlaufplan des Gehschätzers zur Bestimmung der Entfernung;
- Fig. 14: einen Flußlaufplan einer Kalibrierung des Kompasses; und
- Fig. 15: eine Darstellung der Anzeigeeinrichtung in dem Kalibriermodus.

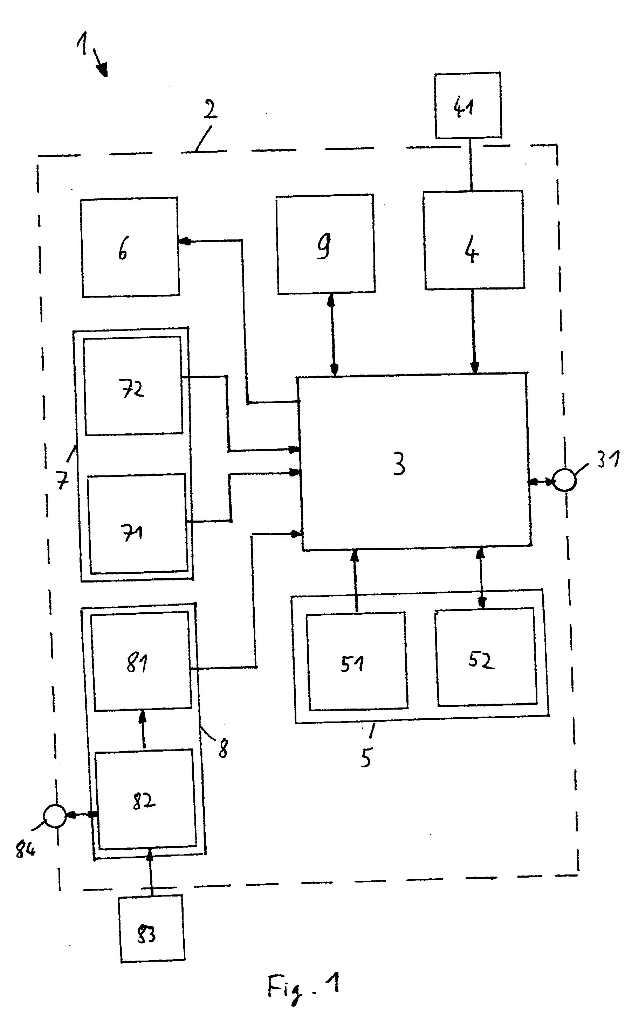

In Fig. 1 ist ein Ausführungsbeispiel eines Zentralgeräts 1 des erfindungsgemäßen Golfnavigationsgeräts dargestellt. Das dargestellte Zentralgerät 1 weist in einem Hauptgehäuse 2 eine Recheneinrichtung 3 und damit verbunden einen GPS-Empfänger 4, eine Speichereinrichtung 5, eine Anzeigeeinrichtung 6, eine Eingabeeinrichtung 7, eine Energieversorgungseinrichtung 8 und ein Funkmodem 9 als Übertragungseinrichtung auf. Das Zentralgerät 1 kann optional einen Datenübertragungsanschluß 31 aufweisen.

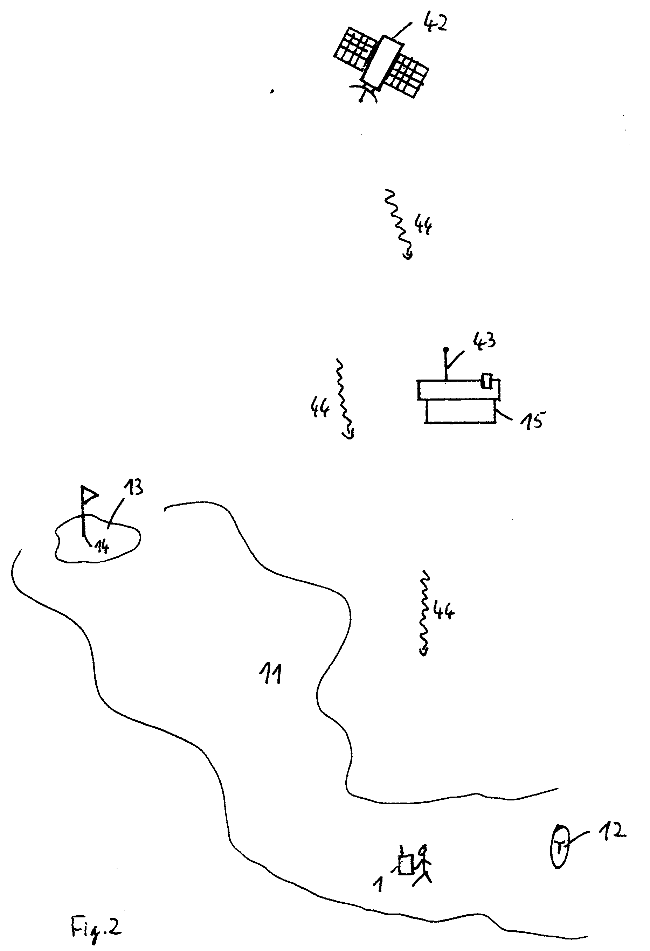

Der GPS-Empfänger 4 empfängt Signale mit Positionsinformationen von einer Antenne 41. Die Signale gehören zu einem Global-Positioning-System. In Fig. 2 ist dargestellt, wie das erfindungsgemäße Golfnavigationsgerät mit dem GPS und der Umgebung zusammenwirkt. Der Golfplatz ist durch eine Bahn 11 mit einem Abschlagpunkt 12 und einem Zielpunkt in einem Grün 13 der Bahn 11 exemplarisch dargestellt. Das Zentralgerät 1 des Golfnavigationsgeräts befindet sich auf der Bahn 11 in der Nähe des Abschlagpunkts 12. Ferner dargestellt ist ein GPS-Satellit, der mit der Bezugsziffer 42 bezeichnet ist. Ferner dargestellt ist eine optionale Referenzstation 43 in einem Clubhaus 15, die zur Durchführung einer Differential-GPS-Navigation erforderlich ist. Die Position des Golfnavigationsgeräts auf der Bahn 11 des Golfplatzes wird von dem GPS-Empfänger 4 aus Funksignalen 44 bestimmt, die von den GPS-Satelliten 42 und gegebenenfalls der Referenzstation 43 ausgestrahlt werden. Die somit bestimmte Position des Golfnavigationsgeräts wird von dem GPS-Empfänger 4 an die Recheneinrichtung 3 als Absolut-Positions-Signal übermittelt. Gegebenenfalls kann zusätzlich ein Gütesignal übermittelt werden, das ein Maß für die aktuelle Genauigkeit der Positionsbestimmung des GPS-Systems ist.

Die Speichereinrichtung 5 umfaßt einen auswechselbaren Speichermodul 51 und einen fest installierten Speicherbaustein 52. Bei dem Speichermodul 51 handelt es sich vorzugsweise um einen Nur-Lese-Speicher, wie beispielsweise ein EPROM oder EEPROM; in diesem ist eine digitalisierte Karte des Golfplatzes gespeichert, die Informationen über die Bahnen 11, die Abschlagorte 12 und die Grüns 13 von einem oder mehreren Golfplätzen aufweist. Ferner können in der Karte Angaben hinsichtlich der Position des Lochs 14 und Angaben über Hindernisse (nicht dargestellt) wie Wasserflächen, Sandbunker oder Gestrüppwiesen enthalten sein. Ferner umfaßt die Karte Höheninformationen, soweit diese verfügbar sind. Zweckmäßigerweise ist die digitalisierte Golfplatzkarte in Form einer Vektorgraphik gespeichert; dies hat gegenüber einer einfachen Bitmap-Graphik den Vorteil des verringerten Speicherplatzbedarfs und der beliebigen Skalierbarkeit, d. h. es können beliebige Ausschnitte der digitalisierten Golfplatzkarte in frei wählbarer Vergrößerung dargestellt werden. Ferner ist in dem Speichermodul 51 ein Muster-Spielverlauf gespeichert. Bei diesem handelt es sich zweckmäßigerweise um einen solchen Spielverlauf, wie er von einer Person mit Vorbildcharakter, beispielsweise einem Golflehrer oder einem professionellen Spieler, auf diesem Golfplatz gespielt wurde. Der Muster-Spielverlauf umfaßt Weginformationen aus einer Mehrzahl von Positionsdaten sowie Zusatzinformationen, insbesondere Schlagdaten hinsichtlich der Anzahl benötigter Schläge, verwendeter Schlägertypen und der damit erzielten Schlagweiten. Der Speicherbaustein 52 ist ein Schreib-/Lese-Speicher, in dem ein oder mehrere Ist-Spielverläufe und andere Informationen von der Recheneinrichtung 3 gespeichert werden.

Auf der Anzeigeeinrichtung 6 werden Informationen dargestellt. Sie ist mit der Recheneinrichtung 3 verbunden. Sie ist graphikfähig, so daß ein wählbarer Bereich der digitalisierten Golfplatzkarte dargestellt werden kann. Ferner werden auf der Anzeigeeinrichtung 6 die von der Recheneinrichtung 3 unter Nutzung von absoluten und relativen Positionsdaten ermittelte Position des Golfspielers dargestellt. Ferner werden auf der Anzeigeeinrichtung 6 der aktuelle Ist-Spielverlauf sowie in einem gesonderten Bereich die Entfernung und Richtung von der aktuellen Position zu dem Zielpunkt der gespielten Bahn dargestellt. Ferner werden die Anzahl der benötigten Schläge, das für die Bahn bestehende Par sowie die für die bisherige Spielrunde benötigte Gesamtzahl der Schläge dargestellt. Ferner kann ein Hilfszielcursor dargestellt sein, der von dem Golfspieler über den dargestellten Bereich der Golfplatzkarte bewegt werden kann, wobei jeweils die Entfernung und Richtung von der aktuellen Position zu dem Hilfsziel angezeigt wird. Die Anzeigeeinrichtung 6 ist auf der Vorderseite des Hauptgehäuses 2 in einem oberen Bereich angeordnet.

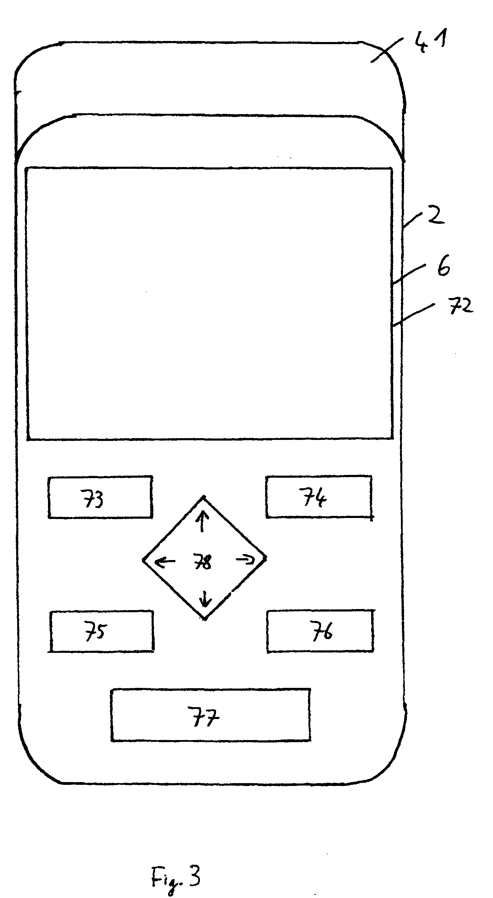

Zur Eingabe von Daten durch den Benutzer ist die Eingabeeinrichtung 7 vorgesehen. Sie umfaßt Schalter und Tasten 71, die auf der Vorderseite des Hauptgehäuses 2 in einem unteren Bereich angeordnet sind. Dies umfaßt bei dem in Fig. 3 dargestellten Ausführungsbeispiel eine Taste 73 zum Aufruf der Menüleiste, eine Taste 74 zum Bestätigen, eine Taste 75 zur manuellen Erhöhung des Zählerstands von Spieler 1, eine Taste 76 zur manuellen Erhöhung des Zählerstands von Spieler 2, eine Taste 77 zum Markieren einer Position und eine Betätigungswippe 78 mit vier Richtungen (oben, unten, links und rechts) zur Auswahl von Menüpunkten. Vorzugsweise ist ferner eine Berühreingabeeinrichtung 72 auf der Anzeigeeinrichtung 6 angeordnet, mittels der durch Berühren einer entsprechenden Stelle auf dem dargestellten Bereich der Golfplatzkarte der Ort eines Hilfsziels in intuitiv leicht verständlicher Weise bestimmt werden kann. Die Berühreingabeeinrichtung 72 kann auch für weitere Eingabefunktionen verwendet werden (bspw. die Markierung der aktuellen Ballposition); andererseits ist sie aber nicht zwingend erforderlich, die Eingabe des Hilfsziels könnte auch über die Betätigungswippe 78 erfolgen.

Die Energieversorgungseinrichtung 8 umfaßt einen Akkumulator 81 als Energiespeicher, der die Einrichtungen des Zentralgeräts 1 mit elektrischer Energie versorgt. Zum Laden des Akkumulators 81 ist eine Ladeschaltung 82 vorgesehen, die elektrische Energie von einer außen an dem Hauptgehäuse 2 angeordneten Solarzelle 83 bezieht. Ferner ist ein Ladeanschluß 84 zum Anschluß einer externen Energiequelle vorgesehen, der mit der Ladeschaltung 82 verbunden ist.

Das Funkmodem 9 ist einerseits mit der Recheneinrichtung 3 und andererseits mit einer Antenne (nicht dargestellt) verbunden. Es ist Teil einer Übertragungseinrichtung zum Empfangen von Meßdaten einer räumlich getrennten Sensoranordnung 100, 200. Ferner überträgt das Funkmodem 9 Befehle an die externe Sensoranordnung 100, 200.

Mit der Recheneinrichtung 3 verbunden ist ein Datenanschluß 31 zum Austausch von Daten mit externen Datenverarbeitungseinrichtungen, beispielsweise einem Personalcomputer. Über diesen Datenanschluß können beispielsweise die Ist-Spielverläufe aus der Speichereinrichtung 5 ausgelesen und zur externen Auswertung übermittelt werden. Ferner kann die in der Speichereinrichtung 5 gespeicherte digitalisierte Golfplatzkarte über den Datenanschluß 31 aktualisiert werden. Bei diesem Datenanschluß 31 wird vorzugsweise ein serielles Datenübertragungsverfahren verwendet, wie es beispielsweise als RS 232 C bekannt ist. In der Regel handelt es sich bei dem Datenanschluß 31 um einen Stecker zum Anschluß eines Datenübertragungskabels (nicht dargestellt), es kann sich jedoch genausogut um einen Infrarot-Datenübertragungsanschluß handeln.

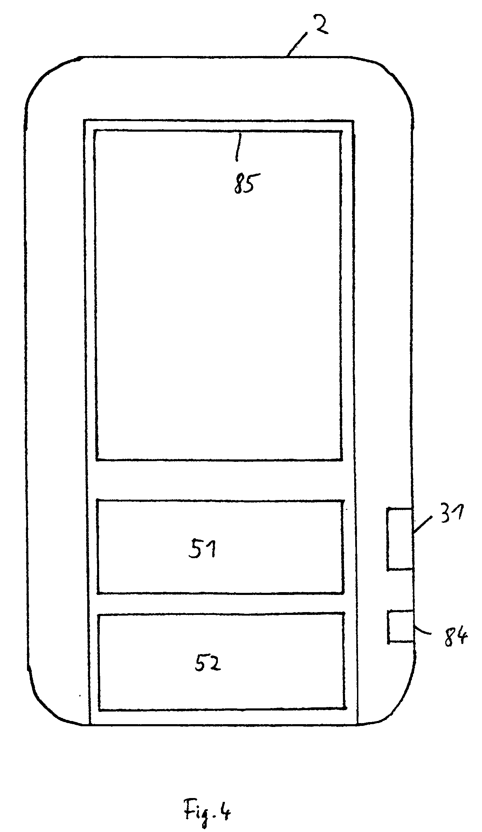

In Fig. 3 und 4 sind die Vorderseite und die Rückseite des Hauptgehäuses 2 des Zentralgeräts 1 des Golfnavigationsgeräts dargestellt. Im oberen Bereich der Vorderseite ist die Anzeigeeinrichtung 6 und im unteren Bereich die Eingabeeinrichtung 7 auf der Vorderseite angeordnet. An dem oberen Rand des Golfnavigationsgeräts ist die GPS-Antenne 41 angeordnet. An der Rückseite des Hauptgehäuses 2 ist ein Fach 85 zur Aufnahme des Akkumulators 81 oder von Batterien (nicht dargestellt) angeordnet. Ferner sind an der Rückseite Einschubschächte zum Einsetzen und zum Entnehmen des auswechselbaren Speichermoduls 51 und gegebenenfalls des Speicherbausteins 52 vorgesehen. An einer Längsseite des Hauptgehäuses 2 ist der Datenanschluß 31 und der Energieversorgungsanschluß 84 angeordnet.

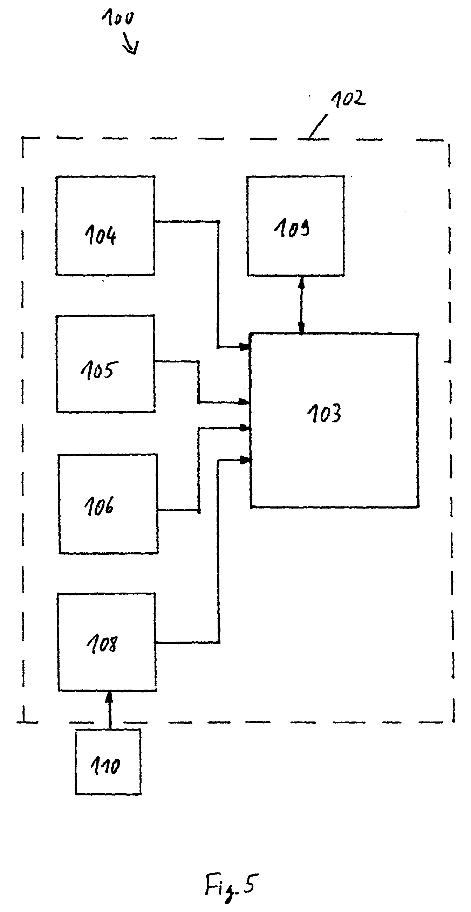

In Fig. 5 ist eine Ausführungsform der räumlich getrennt angeordneten Sensoreinrichtung 100 dargestellt. Die externe Sensoranordnung 100 ist mittels einer geeigneten Halteeinrichtung, beispielsweise einem Clip, an dem Körper des Golfspielers in dem Bereich seines Beckens befestigt. In einem Sensorgehäuse 102 sind eine zweite Recheneinrichtung 103, ein Beschleunigungsgeber 104, bevorzugt dreiachsig mit einer Achse nach unten weisend, ein Magnetometer 105, bevorzugt dreiachsig, ein Neigungsmesser 106, bevorzugt zweiachsig, eine zweite Energieversorgungseinrichtung 108 sowie ein zweites Funkmodem 109 angeordnet. Die zweite Recheneinrichtung 103 weist einen Analog-Digital-Wandler auf, der mit dem Beschleunigungsgeber 104, dem Magnetometer 105 und dem Neigungsmesser 106 verbunden ist. Die zweite Energieversorgungseinrichtung 108 ist mit den elektrische Energie benötigenden Einrichtungen verbunden; zu ihrer Versorgung ist außen an dem Sensorgehäuse 102 eine zweite Solarzelle 110 vorgesehen. Das zweite Funkmodem 109 übermittelt die gemessenen und von der zweiten Recheneinrichtung 103 verarbeiteten Signale an das Funkmodem 9 des Zentralgeräts 1; außerdem dient es zum Empfang von Befehlen von dem Zentralgerät 1.

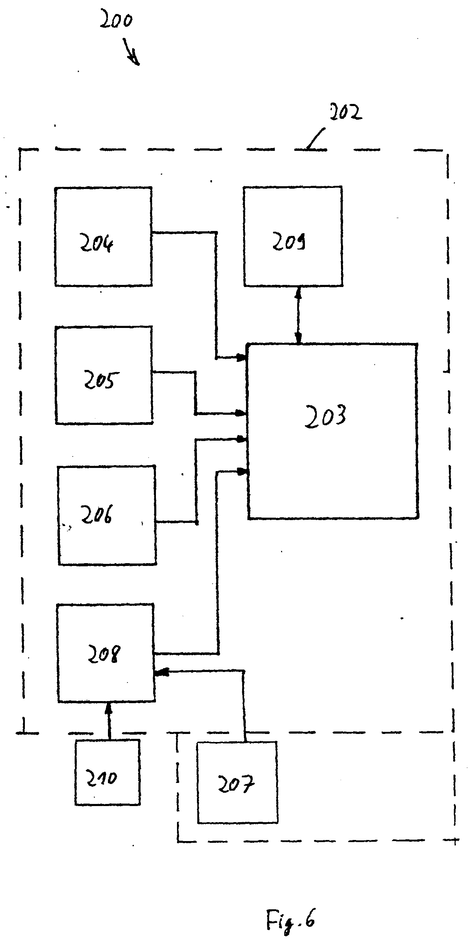

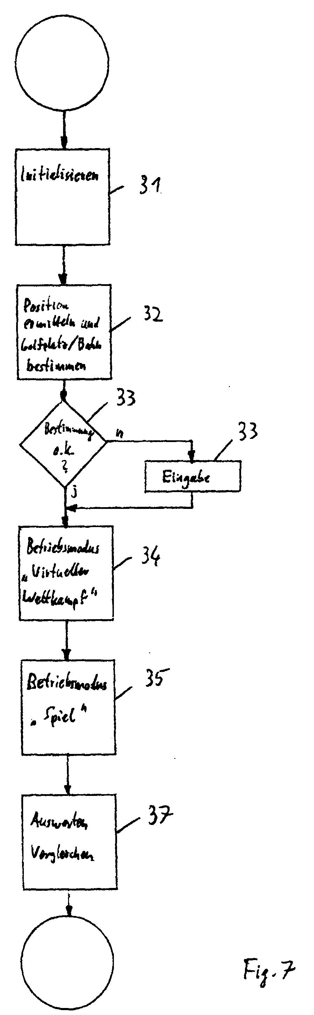

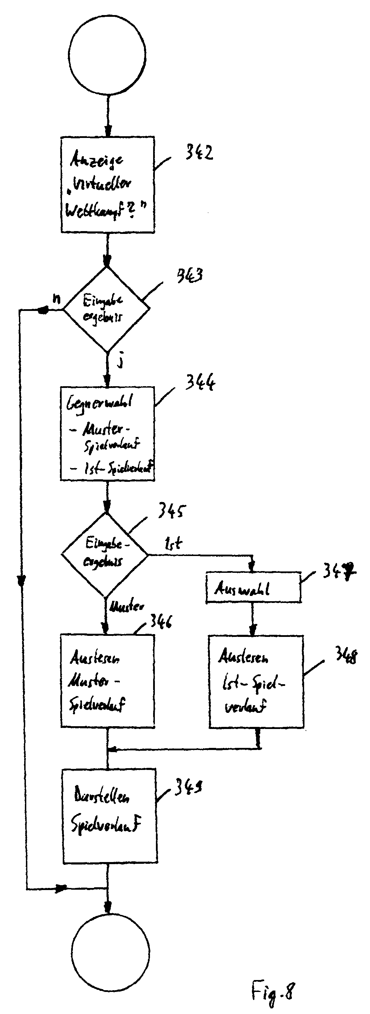

In Fig. 6 ist ein zweites Ausführungsbeispiel einer externen Sensoranordnung 200 dargestellt. In einem Sensorgehäuse 202 sind eine dritte Recheneinrichtung 203, ein Drehsensor 204, ein zweites Magnetometer 205, ein zweiter Neigungsmesser 206, eine dritte Energieversorgungseinrichtung 208 sowie ein drittes Funkmodem 209 angeordnet. Die dritte Recheneinrichtung 203 weist einen Analog-Digital-Wandler auf, der mit dem Drehsensor 204, dem zweiten Magnetometer 205 und dem zweiten Neigungsmesser 206 verbunden ist. Die dritte Energieversorgungseinrichtung 208 ist mit den elektrische Energie benötigenden Einrichtungen verbunden; zu ihrer Versorgung ist außen an dem Sensorgehäuse 202 eine dritte Solarzelle 210 vorgesehen. Das dritte Funkmodem 209 übermittelt die gemessenen und von der dritten Recheneinrichtung 203 verarbeiteten Signale an das Funkmodem 9 des Zentralgeräts 1; außerdem dient es zum Empfang von Befehlen von dem Zentralgerät 1. Die externe Sensoranordnung 200 ist an einem Golfgefährt oder an einem Golftaschenwagen befestigt, wobei mit einem seiner Räder der Drehsensor 204 verbunden ist. Ferner ist ein Dynamo 207 mit einem der Räder verbunden, der zur zusätzlichen Versorgung der dritten Energieversorgungseinrichtung 208 mit dieser verbunden ist. Der Drehsensor 204 und der Dynamo 207 können zusammengebaut sein, wobei der Drehsensor 204 vorzugsweise Signale des Dynamos 207 nutzt.

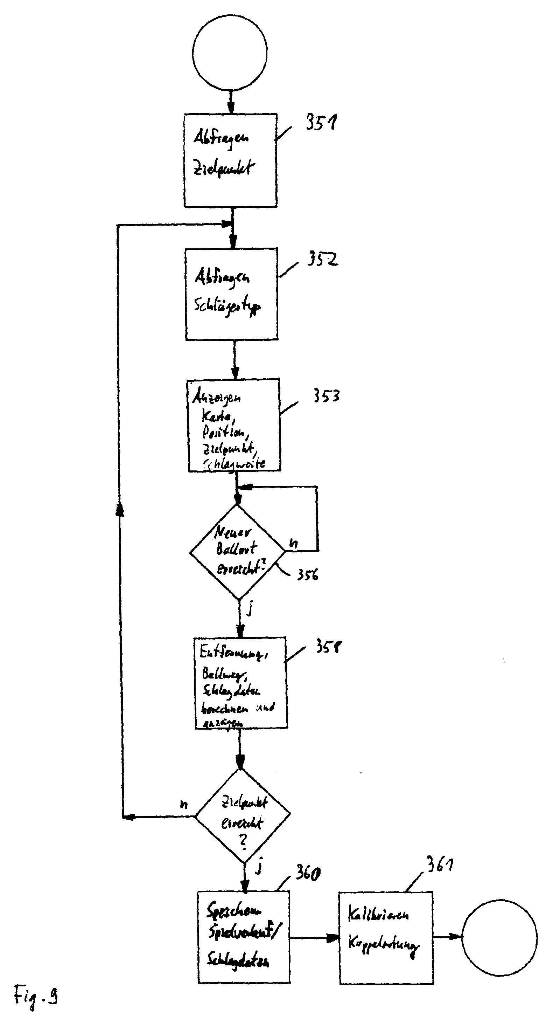

Das Golfnavigationsgerät wird wie folgt benutzt (Fig. 7). Vor der Inbetriebnahme ist ein Speichermodul mit dem Muster-Spielverlauf und der digitalisierten Golfplatzkarte einzusetzen. Nach dem Einschalten erfolgt ein Initialisieren 31, bei dem die Daten der digitalisierten Golfplatzkarte aus der Speichereinrichtung 5 in die Recheneinrichtung 3 eingelesen werden. Nach kurzer Zeit stehen Positionsdaten von dem GPS-Empfänger 4 zur Verfügung. Mit diesen Positionsdaten kann dann der Spielbeginn initialisiert werden, d. h. der Golfplatz und die zu spielende Bahn können bestimmt 32 werden; sollte dies beispielsweise aufgrund fehlender Positionsangaben nicht möglich sein, so kann auch eine Benutzereingabe 33 erfolgen. Auf der Anzeigeeinrichtung 6 wird ein Ausschnitt aus der digitalisierten Golfplatzkarte angezeigt, in der Regel handelt es sich um die Darstellung der gespielten Bahn 11. Der Beginn des Ist-Spielverlaufs und der Datenerfassung ist der zugehörige Abschlag 12 der Bahn 11. In der Anzeigeeinrichtung 6 wird eine Auswahlmöglichkeit 342 für einen Betriebsmodus "virtueller Wettkampf" in 34 angeboten. Nachfolgend erfolgt ein Abfragen 343 einer Eingabe des Benutzers. Ist diese negativ, wird in einem Betriebsmodus "Spiel" 35 fortgefahren; ist diese positiv, wird in dem Betriebsmodus "virtueller Wettkampf" mit den folgenden, in Fig. 8 dargestellten Schritten fortgefahren. Es erfolgt das Anzeigen 344 eines Auswahlmenüs der Gegnerwahl, welches den Muster-Spielverlauf oder einen bereits gespeicherten Ist-Spielverlauf anbietet. Es erfolgt ein Abfragen 345 einer Eingabe des Benutzers. Wurde die erstgenannte Alternative gewählt, so erfolgt ein Lesen 346 des Muster-Spielverlaufs aus dem auswechselbaren Speichermodul 51 und es wird mit dem Darstellen 349 des gelesenen Spielverlaufs fortgefahren. Wird die zweite Alternative gewählt, so erfolgt, sofern mehrere Ist-Spielverläufe gespeichert sind, das Darstellen 347 und Abfragen einer Auswahl aus diesen. Der gewählte Ist-Spielverlauf wird aus dem Speicherbaustein 52 gelesen 348, und das Verfahren fährt mit dem Darstellen 349 des Spielverlaufs fort. Anschließend wird in dem Betriebsmodus "Spiel" 35 fortgefahren.

Bei dem in Fig. 9 dargestellten Betriebsmodus "Spiel" 35 erfolgt ein Abfragen 351 des Zielpunkts. In der Regel handelt es sich hierbei um das Loch 14 der gespielten Bahn 11; anstelle einer Benutzereingabe kann daher auch ein Flächenschwerpunkt des Grüns 13 anhand der digitalisierten Golfplatzkarte ermittelt und als Zielpunkt genommen werden. Nachfolgend erfolgt ein Abfragen 352 des Schlägertyps. Dies ist nur dann erforderlich, wenn schlägertypbezogene Datensammlungen angelegt und vom Schlägertyp abhängige Statistiken erstellt werden sollen. Nachfolgend erfolgt ein Anzeigen 353 des Zielpunkts, einer vorhergesagten Schlagweite und der eigenen Position auf dem gewählten Bereich der Golfplatzkarte auf der Anzeigeeinrichtung 6. Die Darstellung der prognostizierten Schlagweiten ermöglicht es dem Golfspieler zu beurteilen, ob der gewählte Schlägertyp passend ist oder eher unpassend ist, weil beispielsweise eine Landung des Balls in einem Hindernisbereich zu erwarten ist. Um den Golfspieler die Beurteilung zu erleichtern, kann er mittels der Berühreingabevorrichtung 72 oder der Betätigungswippe 74 ein Hilfsziel auf dem dargestellten Bereich der Golfplatzkarte bestimmen, zu dem dann die Entfernung und Richtung von der aktuellen Position angezeigt werden. Liegt beispielsweise vor dem Golfspieler eine zu überquerende Wasserfläche, so braucht er nur den von ihm aus gesehen hinteren Rand der Wasserfläche auf der Berühreingabeeinrichtung 72 anzutippen und das Zentralgerät 1 ermittelt die Entfernung sowie Richtung von der aktuellen Position zu dem gewählten Punkt und zeigt diese an; basierend auf diesen Informationen kann der Golfspieler einen geeigneten Schlägertyp auswählen. Ferner kann er auf diese Weise die Entfernung zu bestimmten Stellen des Muster-Spielverlaufs bestimmen, wodurch das Nachspielen des Muster-Spielverlaufs deutlich erleichtert wird. Nach dem Abschlag geht der Golfspieler an den neuen Ort des Golfballs und markiert diese Stelle durch Betätigen 356 der entsprechenden Taste 77. Die neue Position des Golfballs wird ermittelt und gespeichert. Ferner werden in einem folgenden Schritt 358 die Entfernung zu dem Abschlagort berechnet und angezeigt, der Ballweg gespeichert und angezeigt, die Anzahl der Schläge um 1 erhöht und die Schlagdaten gespeichert. Nach Abfrage 359, ob der Zielpunkt (Loch) erreicht ist, wiederholt sich der Vorgang ab dem Abfragen 352 des Schlägertyps so lange, bis das Loch schließlich erreicht ist. Der für diese Bahn ermittelte Teil des Ist-Spielverlaufs wird mit den Weg- und Schlagdaten abgespeichert 360. Nachfolgend erfolgt ein Kalibrieren 361 der Koppelortung. Der Betriebsmodus "Spiel" 35 wiederholt sich für sämtliche Bahnen eines Spiels. Nach Ende des Spiels ist die Datenerfassung abgeschlossen und wird nachfolgend in einem Betriebsmodus "Auswerten und Vergleichen" 37 fortgefahren.

Zum Bestimmen der Position verwendet die Recheneinrichtung 3 Positionsdaten von dem GPS-Empfänger 4 als absolute Positionsdaten und von den Funkmodems 9, 109 übermittelte Meßsignale der externen Sensoranordnung 100. Alternativ können auch über das Funkmodem 209 Meßsignale der externen Sensoranordnung 200 verwendet werden. Mit den von der externen Sensoranordnung 100 oder 200 stammenden Signalen führt die Recheneinrichtung 3 eine Koppelnavigation durch, d. h. sie ermittelt relative Positionsangaben. Als Startposition wird eine absolute Positionsangabe verwendet, diese kann sowohl von der Navigationseinrichtung 4 oder aus der Speichereinrichtung 5 mit der digitalisierten Golfplatzkarte stammen, wenn eine dort gespeicherte Position wie etwa der Abschlagpunkt als Startpunkt verwendet wird. Aus den von dem GPS-Empfänger 4 ermittelten absoluten Positionsangaben und den mittels der Koppelnavigation berechneten relativen Positionsangaben ermittelt die Recheneinrichtung 3 die aktuelle Position; sie verwendet dafür Datenfusionstechniken, wie sie an sich bekannt sind. So wird zum Beispiel bei Ausfall der GPS-Navigation die aktuelle Position durch Koppelnavigation ausgehend von der zuletzt gemessenen GPS-Position ermittelt. Es ist nicht unbedingt erforderlich, daß die Koppelnavigation zur Berechnung der relativen Position in der Recheneinrichtung 3 durchgeführt wird; dies kann auch in der externen Recheneinrichtung 103, 203 durchgeführt werden. Dies hat den Vorteil, daß über die Funkmodems 9, 109, 209 lediglich die Positionsdaten und nicht die mehr Bandbreite erfordernden Meßdaten der Sensoren übertragen werden müssen. Die Positionsbestimmung wird dadurch auch zuverlässiger, da nicht erkannte Übertragungsstörungen bei dem Übertragen von Meßdaten in einer Falschmessung und damit in einer falsch bestimmten Position resultieren, während eine Übertragungsstörung bei dem Übermitteln einer Position leichter erkannt werden kann.

In der Speichereinrichtung 5 sind mehrere Bereiche vorgesehen, die als Datenpool bezeichnet sind. Beispielsweise ist ein Tages-Datenpool, ein persönlicher Gesamt-Datenpool und ein platzbezogener Datenpool vorgesehen. Der Tages-Datenpool dient zur Dokumentation, d. h. in ihm ist der aktuelle Ist-Spielverlauf zur qualitativen Auswertung durch Darstellen in der Anzeigeeinrichtung 6 gespeichert. In ihm sind insbesondere die Schlagdaten mit den Schlägertypen und den Positionen der Abschläge enthalten. Der persönliche Gesamt-Datenpool dient zur Analyse und Prädiktion. Dazu sind für einen Spieler eine große Anzahl von Schlagdaten gespeichert. Aus diesen können Stichproben für die Auswertung und Prädiktion gezogen werden. Er enthält insbesondere die mit einem Schlägertyp erreichten Schlaglängen zur Vorhersage der mit diesem Schlägertyp zu erwartenden Schlagweite. Zweckmäßigerweise werden die für die Prädiktion verwendeten Schlaglängen um Windeinfluß berichtigt. Das kann auf die Weise geschehen, daß die gemessene Schlaglänge je nach Windeinfluß korrigiert und so gespeichert wird oder die gemessene Schlaglänge zusammen mit den Winddaten gespeichert wird, um dann erst bei der Prädiktion die Korrektur vorzunehmen. Der platzbezogene Datenpool dient zur Dokumentation, d. h. zur Dokumentation sämtlicher Spiele auf einem bestimmten Platz in einer Art und Weise, die anschließend eine graphische Darstellung des Spielverlaufs auf dem Display gestattet. Unter anderem sind die Anzahl der Schläge je Bahn und Spielrunde sowie die Schlaglänge in Abhängigkeit von dem verwendeten Schlägertyp gespeichert.

Die Auswertung der Datenpools erfolgt auf folgende Weise. Der Tages-Datenpool ermöglicht eine Zählauswertung, d. h. die Anzahl der Schläge einer Spielrunde, eine Ergebnisauswertung in Abhängigkeit von der jeweiligen Zählweise (Bruttoergebnis) und eine Ergebnisauswertung in Abhängigkeit von einem Handicap (Nettoergebnis). Das Nettoergebnis wird berechnet, indem von dem Bruttoergebnis das Handicap (Vorgabe) abgezogen wird. Teilweise finden andere Zählweisen Anwendung, vor allem bei Turnieren. Aus dem persönlichen Gesamt-Datenpool werden statistische Kenngrößen, wie Mittelwert, Standardabweichung, Varianz, Maximal- und Minimalwert, für die Schlagweite in Abhängigkeit von dem Schlägertyp gebildet. Ferner wird die statistische Aussagesicherheit bestimmt, d. h. der Vertrauensbereich für die Prädiktion. Aus dem platzbezogenen Datenpool können die besten und schlechtesten Spiele bezogen auf den gesamten Platz und/oder einzelne Bahnen abgerufen und dargestellt werden. Ferner kann eine Platzstatistik erstellt werden, beispielsweise mit Durchschnittswerten für die Schlaglänge pro Bahn oder maximale bzw. minimale Schlaglänge pro Bahn und Runde. Ferner kann eine Prädiktion der Schlaglänge vorgenommen werden, die auch als "inverse Schlaglängenberechnung" bezeichnet werden kann. Basierend auf der Entfernung zu dem Zielpunkt oder einem Hilfsziel wird unter Berücksichtigung der mit den einzelnen Schlägertypen zu erwartenden Schlagweite eine Schlägerempfehlung ermittelt und auf der Anzeigeeinrichtung 6 dargestellt.

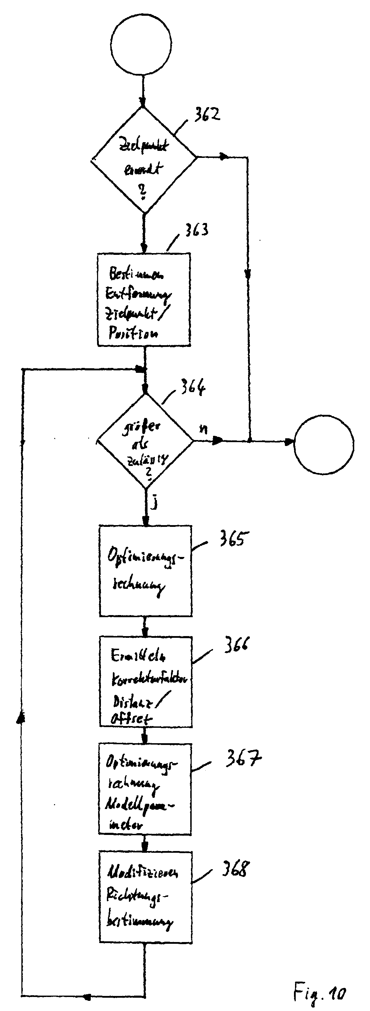

In Fig. 10 ist eine Kalibrierung der Koppelnavigation dargestellt. In einem ersten Schritt 362 wird detektiert, ob der Zielpunkt einer Bahn 13, also üblicherweise das Loch 14, erreicht ist. Dies kann automatisch durch Vergleich der aktuellen Position mit der bekannten Position des Lochs 14 geschehen oder durch Abfragen einer Benutzereingabe verifiziert werden. In einem nachfolgenden Schritt 363 wird die Entfernung zwischen der aus der digitalisierten Golfplatzkarte bekannten Position des Zielpunkts und der aktuellen Position bestimmt. In einem nachfolgenden Schritt 364 wird bestimmt, ob die Entfernung größer als eine zulässige Höchstabweichung ist. Ist dies der Fall, so erfolgt in einem nachfolgenden Schritt 365 eine Optimierungsrechnung, mittels der Korrekturfaktoren für die Distanz ermittelt 366 und ein Offset des Magnetometers 105, 205 ermittelt werden. Nachfolgend wird eine Optimierungsrechnung 367 zur Modifikation von Parametern eines Modells und von Polynomkoeffizienten durchgeführt. Mittels des Offsets des Kompaßsensors 205 wird ferner die Richtungsbestimmung modifiziert 368. Eine Optimierung ist deshalb zweckmäßig, da durch eine Koppelortung Fehler erzeugt werden, die sich mit der Zeit zu wachsenden Ablagen vom wahren Ort aufsummieren. Startpunkt der Koppelortung ist der Abschlag 12 einer Bahn 11. Ende der Koppelortung ist das Loch 14 derselben Bahn 11. Die Positionen beider Punkte sind aus der digitalen Karte bekannt. Der Ist-Spielverlauf entspricht einem offenen Polygonzug vom Abschlag 12 zum Loch 14. Sind Fehler in der Rechnung aufgetreten, so endet der Polygonzug nicht am Loch 14. Dieser Fehler wird nach Betrag und Richtung in einer Optimierungsrechnung minimiert. Parameter der Optimierung können sein: Fehler der Schrittlängenschätzung, Fehler des Kompasses. Günstige Verfahren sind beispielsweise: Last Square, Rosenbrock'scher Optimierer. Beide genannten Parameter werden so lange variiert, bis der Fehler ein Minimum einnimmt. Die sich ergebenden Variationen der Schrittlänge und der Gehrichtung werden in die weitere Koppelortung einbezogen.

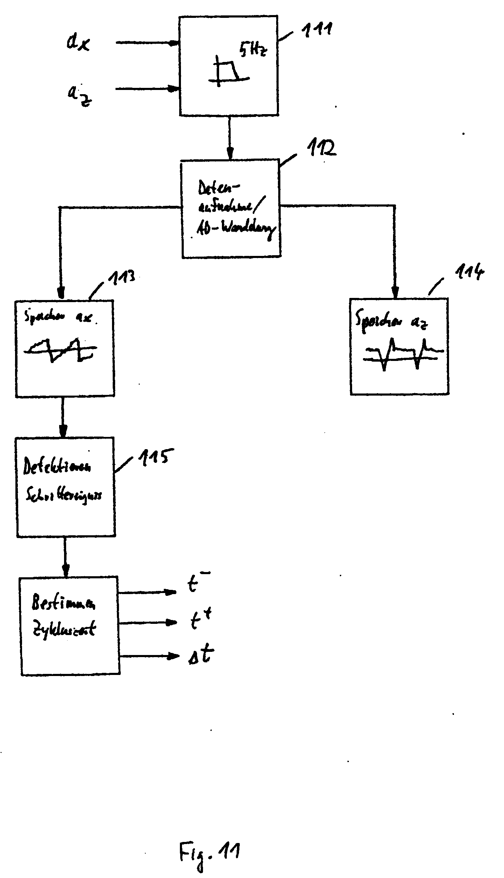

Die Arbeitsweise des Gehschätzers ist in den Fig. 11, 12 und 13 dargestellt. Die nachfolgend erläuterten Rechnungen und Schritte werden von der Recheneinrichtung 3 durchgeführt, um aus den von der externen Sensoranordnung 100 mittels des Beschleunigungsgebers 104 gemessenen Beschleunigungsdaten die zurückgelegte Gehstrecke und Gehgeschwindigkeit zu ermitteln. Die Berechnungen können auch in der externen zweiten Recheneinrichtung 103 durchgeführt werden. Die Werte ax der Beschleunigungen in Horizontalrichtung und az in Vertikalrichtung werden erfaßt, einem Anti-Aliasing-Filter 111 zugeführt, der eine Knickfrequenz von 5 Hz oder höher hat, und dann mit einer Sample-Frequenz von vorzugsweise mindestens 20 Hz einer Analog-/Digital-Wandlung 112 unterzogen. Die Ausgangswerte werden in jeweils einem eigenen Speicherbereich 113, 114 für ax bzw. az über eine Rahmenzeit von einer Sekunde gespeichert. Zur Detektion eines Schrittereignisses 115 wird in den gespeicherten Beschleunigungswerten von vorzugsweise ax ein Extremum gesucht, das beispielsweise für ein Aufsetzen der linken Ferse steht, danach ein nachfolgendes Extremum gesucht, das in dem gewählten Beispiel für ein Aufsetzen der rechten Ferse steht, und schließlich ein weiteres Extremum gesucht, das wiederum für ein Aufsetzen der linken Ferse steht. Damit ist der Zyklus eines Schritts eines, im gewählten Beispiel des linken, Beins vollständig. Durch Berechnen der Zeitdifferenz zwischen den Zeitpunkten für das aufeinanderfolgende Aufsetzen einer Ferse wird die Zykluszeit bestimmt 116.

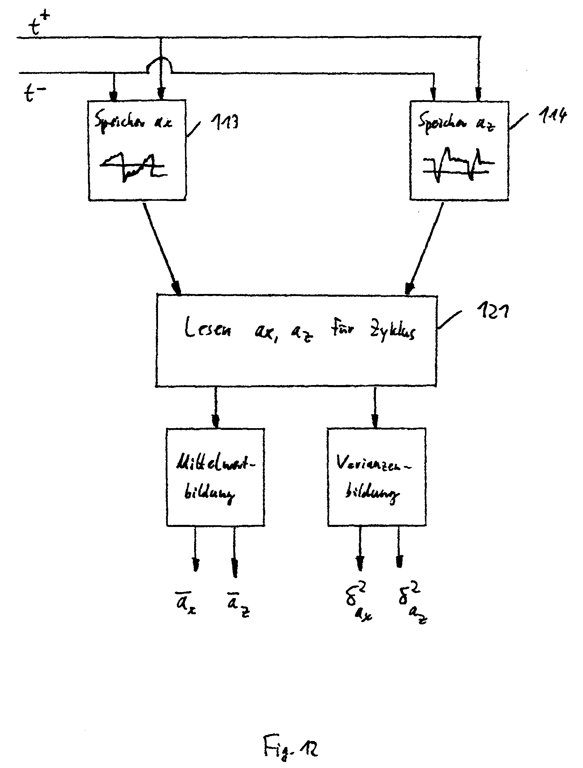

In Fig. 12 ist dargestellt, wie mit der Zykluszeit weitere statistische Größen ermittelt werden. Für die Dauer einer Zykluszeit werden Beschleunigungswerte ax, az aus den zugeordneten Speicherbereichen 113, 114 ausgelesen 121. Durch Mittelwertbildung 122 der gelesenen Beschleunigungswerte ax, az jeweils für sich werden Mittelwerte der Beschleunigung ax bzw. der Beschleunigung az ermittelt. Durch Varianzbildung 123 über die Zykluszeit werden Varianzen der Beschleunigungswerte ax bzw. az ermittelt.

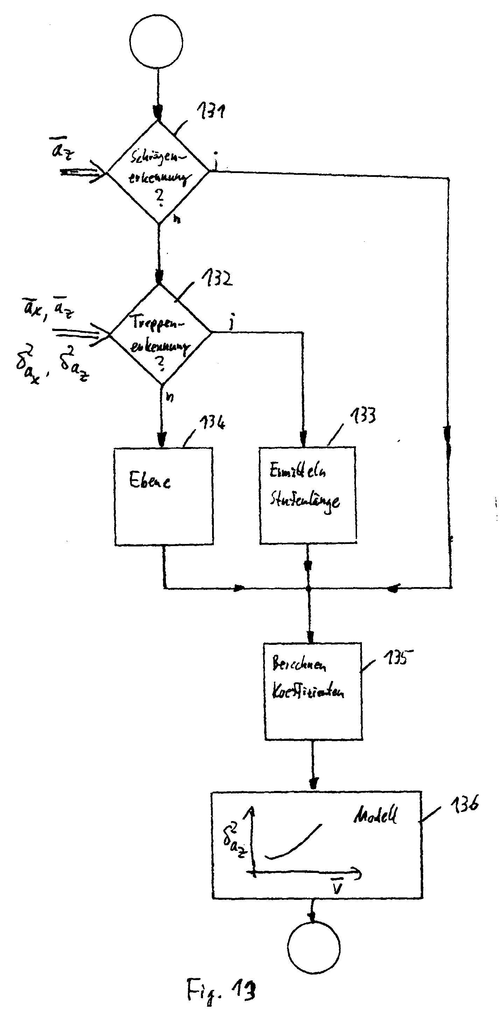

In Fig. 13 ist die Modellierung für den Gehschätzer dargestellt. Mittelwertdaten der Beschleunigung az werden in einem Schrägen-Erkennungsschritt 131 verarbeitet und beeinflussen Koeffizienten 135 eines Schätz-Modells 136. Der Schrägen-Erkennungsschritt 131 nutzt die Korrelation der Mittelwertdaten der Beschleunigung az unter Verwendung eines Polynomansatzes, vorzugsweise mindestens 2. Ordnung, aus einer Regression. Falls keine Schräge erkannt wird, werden Varianz und Mittelwertdaten der Beschleunigungen ax, az in einem Treppen-Erkennungsschritt 132 verarbeitet und dabei eine feste Stufenlänge 133 ermittelt. Falls keine Treppe erkannt wird, wird eine Ebene angenommen 134 und in einem weiteren Schritt die Koeffizienten 85 bestimmt. Bei diesen handelt es sich um Koeffizienten des dem Modellberechnungsschritt 136 zugrunde liegenden Schätz-Modells, bei welchen aus Varianzdaten der Beschleunigung az eine mittlere Gehgeschwindigkeit ermittelt wird. Aus der damit ermittelten Gehgeschwindigkeit und der bereits ermittelten Zykluszeit kann die Gehstrecke ermittelt werden. Durch Multiplikation der mittleren Gehgeschwindigkeit mit der Zyklusdauer kann die Schrittlänge eines Beins ermittelt werden; eine durchschnittliche Schrittlänge wird durch Mitteilung der Schrittlängen beider Beine berechnet. Durch Aufsummieren der Schrittlängen wird die gegangene Gehstrecke berechnet. Die Gehstrecke 3 wird, falls sie in der externen zweiten Recheneinrichtung 103 berechnet wurde, über die Funkmodems 9, 109 an die Recheneinrichtung 3 zur Weiterverarbeitung bei der relativen Positionsbestimmung mittels Koppelnavigation übermittelt.

Die zu Fig. 13 beschriebene Modellierung ist eine gute Möglichkeit von mehreren. Eine einfache, wenngleich etwas ungenauere Alternative weist folgende Schritte auf: Zuerst wird die Dauer eines Schrittes bestimmt, z. B. aus Beschleunigungen; sie läßt sich aber auch aus dem Rauschen des Neigungssensors bestimmen, da dieser eine Eigendynamik hat und auf die Körperbewegungen reagiert. Als zweites wird die Schrittlänge aus einem linearen Modell ermittelt. Das entspricht dem Polynom-Modell in Fig. 13, wobei die Zyklusdauer als Parameter genutzt wird. Diese Alternative ist zwar hinsichtlich der erreichten Ergebnisse nicht optimal, jedoch in der Regel ausreichend genau und weniger aufwendig, da Sensoren eingespart werden können. Hierbei kann insbesondere ein Polynom 1. Ordnung, beispielsweise eine Regressionsgerade, verwendet werden.

Geeignete Eingabeparameter für das Polynom des Gehschätzers sind insbesondere (mit abnehmender Güte) die Varianz az, die Zyklusdauer, die Varianz ax, der Maximumwert ax, die Varianz einer horizontal quer zur Gehrichtung gemessenen Beschleunigung ay und der Höchstwert von az.

Mittels eines nicht dargestellten weiteren Verarbeitungsschritts kann aus den gespeicherten Beschleunigungswerten ax, az auch ein Schlagereignis bestimmt werden, d. h. wann der Golfspieler abschlägt. Die Detektion des Schlagereignisses verläuft grundsätzlich ähnlich wie die in Fig. 11 dargestellte Detektion eines Schrittereignisses; jedoch können auch aufwendigere statistische Verfahren als eine einfache Maximumbestimmung vorgesehen sein. Die Position, die zu dem Zeitpunkt des Schlagereignisses aktuell von dem Golfspieler eingenommen ist, kann dann als Abschlagort in der Speichereinrichtung und den entsprechenden Datenpools gespeichert werden, ohne daß eine Eingabe des Golfspielers auf der Eingabeeinrichtung 7 erforderlich ist, da der auf diese Weise detektierte Abschlagort in der Regel identisch ist mit dem neuen Ballort des vorhergegangenen Schlags, der bisher durch Betätigen der Taste 77 markiert wurde. Damit entfällt das Drücken einer Taste bei jedem Abschlag oder bei Erreichen der neuen Ballposition, wodurch sich einerseits die Benutzung des Golfnavigationsgeräts vereinfacht und andererseits eine größere Zuverlässigkeit, insbesondere bei der Schlagzählung, erzielt wird.

Polynomansätze zum Bestimmen von Parametern des Gehens, wie beispielsweise Geschwindigkeit, und zum Gewinnen von Meßwerten sind dem Fachmann bekannt und beispielsweise in
Cavagna, G.A. und Franzetti, P., The determinants of the step frequency in walking humans, H. Physiol., vol. 373, pp. 235-242, 1986;
Inman, V.T., Ralston, H.J., Todd, F., Human Walking, Williams & Wilkins, Baltimore/London, 1981;
Kirtley, C., Whittle, M.W., Influence of walking speed on gait parameters, J. Biomed. Eng., vol. 7, pp. 282-288, 1985; Jefferson, R.J., Morris J.R., Accelerometry - a technique for the measurement of human body movements, J. Biomechanics, vol. 6, pp. 729-736, 1973 beschrieben.

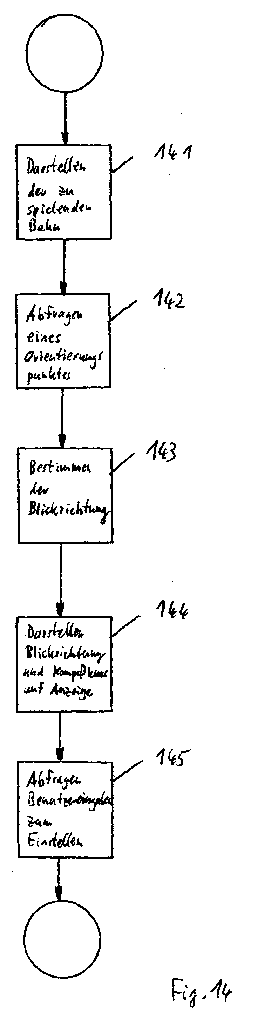

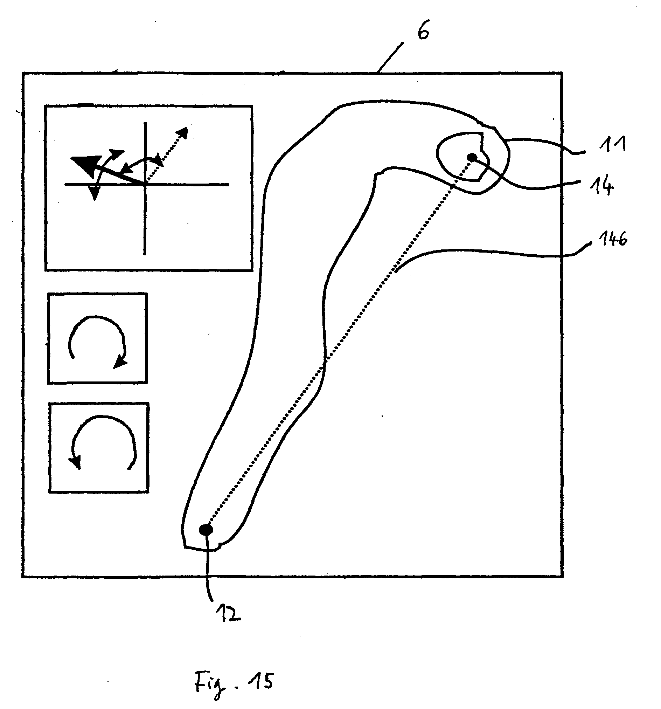

In Fig. 14 ist ein manuelles Kalibrieren des Kompasses dargestellt. Dies ist deshalb erforderlich, da der Kompaß üblicherweise fest im Gehäuse, beispielsweise des Sensorclips 100, sitzt. Solch ein Clip kann an beliebiger Stelle am Gürtel des Benutzers befestigt werden. Daher stimmen die Gehrichtung des Benutzers und die Sensorachse des Kompasses im allgemeinen nicht überein. Damit der Benutzer die Kalibrierung durchführen kann, ist das nachfolgend beschriebene Kallibrierverfahren vorgesehen. Zweckmäßigerweise wird es über einen Menüpunkt in dem Schritt Initialisieren 31 aufgerufen. Zuerst wird die zu spielende Bahn 11 auf der Anzeigeeinrichtung 6 dargestellt 141. Anschließend erfolgt das Abfragen 142 eines Orientierungspunktes, bei dem es sich um einen von dem Abschlag aus sichtbaren markanten Punkt handelt; im allgemeinen ist dies die Fahne am Loch 14 der zu spielenden Bahn 11. Das Abfragen 142 umfaßt ein Markieren des ausgewählten Orientierungspunkts auf der Anzeigeeinrichtung 6 mittels Betätigen der Betätigungswippe 78. Nachdem der Benutzer seinen Körper in die Richtung zu diesem Orientierungspunkt gedreht hat, wird die Blickrichtung 146 aus dem aus der Karte bekannten Abschlagsort und dem markierten Orientierungspunkt bestimmt 143. Zweckmäßigerweise werden auf der Anzeigeeinrichtung 6 Blickrichtung 146 und Kompaßkurs dargestellt 144. Anschließend werden Benutzereingaben abgefragt 145, mit denen der dargestellte Kompaßkurs in Deckung mit der Blickrichtung 146 gedreht wird. Der Winkel der dazu erforderlichen Drehung entspricht dem Kompaßfehler. Dieser Wert wird gespeichert und bei der Koppelortung zu der Korrektur der Kompaßwerte verwendet. Eine Darstellung des Kalibriermodus auf der Anzeigeeinrichtung 6 ist in Fig. 15 gezeigt

## Patentansprüche

1. Golfnavigationsgerät zum Bestimmen und Anzeigen der Position eines Golfspielers auf einem Golfplatz, das portabel ist und eine Navigationseinrichtung, eine Speichereinrichtung (5), eine Eingabeeinrichtung (7) sowie eine Anzeigeeinrichtung (6) aufweist, die mit einer Recheneinrichtung (3) verbunden sind, wobei in der Speichereinrichtung (5) eine digitalisierte Golfplatzkarte gespeichert ist, dadurch gekennzeichnet, daß in der Speichereinrichtung (5) ein Muster-Spielverlauf gespeichert ist.

2. Gerät nach Anspruch 1, dadurch gekennzeichnet, daß ein auswechselbares Speichermodul (51) vorgesehen ist, in dem die digitalisierte Golfplatzkarte und der Muster-Spielverlauf gespeichert sind.

3. Gerät nach Anspruch 1 oder 2, dadurch gekennzeichnet, daß die Golfplatzkarte dreidimensional ist.

4. Gerät nach einem der Ansprüche 1 bis 3, dadurch gekennzeichnet, daß die Golfplatzkarte als eine Vektorgraphik gespeichert ist.

5. Gerät nach einem der Ansprüche 1 bis 4, dadurch gekennzeichnet, daß in der Speichereinrichtung (5) ein Ist-Spielverlauf mit Wegdaten des Golfspielers und Zusatzinformationen, insbesondere Schlagdaten, gespeichert ist.

6. Gerät nach Anspruch 5, dadurch gekennzeichnet, daß auf der Anzeigeeinrichtung (6) ein wählbarer Bereich der Golfplatzkarte, der Muster-Spielverlauf, ein Ist-Spielverlauf und/oder die Entfernung sowie Richtung zu einem Zielpunkt wahlweise darstellbar sind.

7. Gerät nach Anspruch 5 oder 6, dadurch gekennzeichnet, daß eine Vergleichseinrichtung (3) vorgesehen ist, die einen Ist-Spielverlauf mit einem anderen oder dem Muster-Spielverlauf vergleicht.

8. Gerät nach einem der Ansprüche 1 bis 7, dadurch gekennzeichnet, daß die Navigationseinrichtung (4) eine Absolut-Positions-Bestimmungseinrichtung und eine Relativ-Positions-Bestimmungseinrichtung umfaßt.

9. Gerät nach einem der Ansprüche 1 bis 8, dadurch gekennzeichnet, daß als Absolut-Positions-Bestimmungseinrichtung ein GPS-Empfänger (4), vorzugsweise ein DGPS-Empfänger, vorgesehen ist.

10. Gerät nach einem der Ansprüche 1 bis 8, dadurch gekennzeichnet, daß als Absolut-Positions-Bestimmungseinrichtung eine Peileinrichtung vorgesehen ist.

11. Gerät nach einem der Ansprüche 1 bis 10, dadurch gekennzeichnet, daß die Golfplatzkarte Angaben zur örtlichen Mißweisung umfaßt, die vorzugsweise als Isogonen gespeichert sind.

12. Gerät nach Anspruch 11, dadurch gekennzeichnet, daß mindestens ein Sensor (100, 200) der Relativ-Positions-Bestimmungseinrichtung räumlich getrennt angeordnet ist und eine vorzugsweise drahtlose Übertragungseinrichtung (109, 209) aufweist.

13. Gerät nach Anspruch 11 oder 12, dadurch gekennzeichnet, daß eine Kompensationseinrichtung (106, 206) für die Sensoren, insbesondere hinsichtlich Neigung, vorgesehen ist.

14. Gerät nach Anspruch 12 oder 13, dadurch gekennzeichnet, daß ein Sensor als Beschleunigungsgeber (104) ausgeführt und an dem Golfspieler angeordnet ist.

15. Gerät nach einem der Ansprüche 11 bis 13, dadurch gekennzeichnet, daß der Beschleunigungsgeber (104) im Bereich des Beckens des Golfspielers angeordnet ist.

16. Gerät nach Anspruch 15, dadurch gekennzeichnet, daß der Beschleunigungsgeber (104) zur Messung von zwei Richtungen eingerichtet ist, insbesondere von Längs- und Vertikalbeschleunigungen.

17. Gerät nach einem der Ansprüche 12 bis 16, dadurch gekennzeichnet, daß der Sensor (100, 200) ein durch die Übertragungseinrichtung (109, 209) übertragbares Identitätsmerkmal aufweist.

18. Gerät nach einem der Ansprüche 1 bis 17, dadurch gekennzeichnet, daß es eine Windmeßeinrichtung aufweist.

19. Gerät nach einem der Ansprüche 1 bis 18, dadurch gekennzeichnet, daß es eine Eingabeeinrichtung zur Markierung einer aktuellen Ballposition aufweist.

20. Verfahren zum Navigieren bei einem Golfspiel, mit den Schritten
- Auslesen eines Bereichs einer digitalen Golfplatzkarte aus einer Speichereinrichtung,
- Anbieten (344) einer Auswahlmöglichkeit zwischen mindestens einem Muster-Spielverlauf und/oder einem in der Speichereinrichtung (5) gespeicherten Ist-Spielverlauf,
- Auslesen (346) eines Muster-Spielverlaufs aus der Speichereinrichtung,
- Bestimmen der aktuellen Position (355, 357) mittels einer Navigationseinrichtung,
- Speichern (360) eines Ist-Spielverlaufs in der Speichereinrichtung und
- Anzeigen und/oder Vergleichen (37) des Ist-Spielverlaufs mit dem gewählten Spielverlauf.

21. Verfahren nach Anspruch 20, gekennzeichnet durch Abfragen (356) einer Tastenbetätigung zum Ermitteln eines Abschlagorts.

22. Verfahren nach Anspruch 20 oder 21, gekennzeichnet durch Abfragen (352) eines Schlägertyps.

23. Verfahren nach einem der Ansprüche 20 bis 22, gekennzeichnet durch Abfragen einer Anzahl von Golfspielern und Speichern der jeweiligen Ist-Speicherverläufe in einem zugeordneten Bereich der Speichereinrichtung (5).

24. Verfahren nach einem der Ansprüche 20 bis 23, gekennzeichnet durch Speichern von Wegdaten und Zusatzinformationen, insbesondere Schlagdaten, in dem einem Ist-Spielverlauf zugeordneten Bereich der Speichereinrichtung (5).

25. Verfahren nach einem der Ansprüche 20 bis 24, gekennzeichnet durch Auswählen und Abfragen (351) eines Zielpunkts und Berechnen sowie Anzeigen (353) der Entfernung zu dem Zielpunkt.

26. Verfahren nach Anspruch 25, gekennzeichnet durch Abfragen eines Hilfsziels und Berechnen sowie Anzeigen der Entfernung zu dem Hilfsziel.

27. Verfahren nach einem der Ansprüche 20 bis 26, gekennzeichnet durch Sammeln und Speichern von Wegdaten und Zusatzinformationen über einen wählbaren Zeitraum in einem intervallbezogenen Datenpool.

28. Verfahren nach einem der Ansprüche 20 bis 27, gekennzeichnet durch Sammeln und Speichern von Schlagdaten in einem spielerbezogenen Datenpool.

29. Verfahren nach einem der Ansprüche 20 bis 28, gekennzeichnet durch Sammeln und Speichern von Wegdaten und Zusatzinformationen in einem golfplatzbezogenen Datenpool.

30. Verfahren nach einem der Ansprüche 20 bis 29, gekennzeichnet durch Berechnen einer Vorhersage für eine mit einem Schlägertyp zu erwartende Schlagweite.

31. Verfahren nach Anspruch 30, gekennzeichnet durch Einbeziehen topologischer Merkmale in die Berechnung der Vorhersage.

32. Verfahren nach einem der Ansprüche 20 bis 31, gekennzeichnet durch Durchführen einer Datenfusion von absoluten und relativen Positionsdaten.

33. Verfahren nach einem der Ansprüche 20 bis 32, gekennzeichnet durch
- Abfragen (142) eines Orientierungspunktes,
- Bestimmen einer Richtung zu dem Orientierungspunkt,
- Bestimmen (143) der von der Kompaßeinrichtung gemessenen Richtung bei einem zu dem Orientierungspunkt blickenden Benutzer,
- Ermitteln der Winkeldifferenz zwischen den Richtungen und
- Speichern dieser Winkeldifferenz zum Korrigieren der Meßwerte der Kompaßeinrichtung.

34. Verfahren nach einem der Ansprüche 20 bis 33, gekennzeichnet durch
- Ermitteln und Speichern (362) eines Start- und Endpunkts zumindest eines Teils eines Spielverlaufs, insbesondere Abschlagpunkt und Zielpunkt einer Bahn, unter Verwendung relativer oder absoluter Positionsdaten,
- Bestimmen (363) einer Differenz zur bekannten Position des Endpunkts und
- Modifizieren (366, 367, 368, 369) von Parametern für die Koppelnavigation.

35. Verfahren nach einem der Ansprüche 20 bis 34, gekennzeichnet durch
- Messen (111) von Beschleunigungswerten des Golfspielers,
- Speichern (103, 104) der Beschleunigungswerte über einen Zeitraum,
- Berechnen (137) der Gehgeschwindigkeit und/oder Gehstrecke mittels eines Schätz-Modells.

36. Verfahren nach Anspruch 35, gekennzeichnet durch Messen (111) von Beschleunigungen in zwei Richtungen, insbesondere von Längs- und Vertikalbeschleunigungen.

37. Verfahren nach Anspruch 35 oder 36, gekennzeichnet durch Verwenden (136) eines ersten Polynomansatzes mit einer Korrelation von Varianzen der Beschleunigungswerte zum Berechnen der Gehgeschwindigkeit oder Gehstrecke.

38. Verfahren nach einem der Ansprüche 20 bis 36, gekennzeichnet durch Verwenden eines ersten Polynomsatzes mit Bestimmen der Schrittdauer und Schrittlänge zum Berechnen der Gehgeschwindigkeit oder Gehstrecke, wobei zum Bestimmen der Schrittdauer vorzugsweise Beschleunigungen gemessen werden.

39. Verfahren nach einem der Ansprüche 35 bis 38, gekennzeichnet durch Schätzen (131) einer Schräge einer Wegstrecke, insbesondere durch Verwenden eines zweiten Polynomansatzes mit einer Korrelation von Mittelwerten der Beschleunigungswerte, vorzugsweise der Vertikalbeschleunigung.

40. Verfahren nach einem der Ansprüche 35 bis 39, gekennzeichnet durch Schätzen (132) einer Treppensteigung und einer einheitlichen Stufenlänge durch Verwenden von Mittelwerten und Varianzen der Beschleunigungswerte.

41. Verfahren nach einem der Ansprüche 35 bis 40, gekennzeichnet durch Detektieren eines Schlagereignisses aus den Beschleunigungswerten zum Bestimmen des Abschlagorts.
